# EUROPÄISCHE PATENTSCHRIFT

(11) **EP 3 364 785 B1**
(45) Veröffentlichungstag und Bekanntmachung des Hinweises auf die Patenterteilung: **30.03.2022**
(21) Anmeldenummer: 16784524.7
(22) Anmeldetag: 21.10.2016
(51) Int. Cl.: A24C 5/358

(54) **BEHÄLTER AUS LEITFÄHIGEM KUNSTSTOFF**
CONTAINER MADE OF CONDUCTIVE PLASTIC
RÉSERVOIR COMPOSÉ DE MATIÈRE PLASTIQUE ÉLECTROCONDUCTRICE

(30) Priorität: 23.10.2015 DE 202015105643 U
(43) Veröffentlichungstag der Anmeldung: 29.08.2018
(73) Patentinhaber: Hauni Maschinenbau GmbH, 21033 Hamburg (DE)
(72) Erfinder: WUTTKE, Tobias, 21031 Hamburg (DE); WILLIG, Jens, 23843 Bad Oldesloe (DE); MÜLLER, Thomas, 20259 Hamburg (DE)
(74) Vertreter: Stork Bamberger Patentanwälte PartmbB
(86) Internationale Anmeldenummer: PCT/EP2016/075362
(87) Internationale Veröffentlichungsnummer: WO 2017/068117

(56) Entgegenhaltungen:
- EP-A1- 2 805 633
- DE-A1- 10 051 790
- DE-A1- 10 259 498
- DE-A1-102013 114 071
- US-A1- 2005 277 726
- US-A1- 2013 228 726

## Beschreibung

Die vorliegende Erfindung betrifft Behälter zum Aufbewahren oder Aufnehmen bzw. Abgeben von stabförmigen Produkten aus der Tabak verarbeitenden Industrie, umfassend einen aus zwei zumindest im Wesentlichen parallelen und beabstandet zueinander angeordneten Seitenwänden und zwei in Transportrichtung T bzw. T_{R} weisenden Stirnwänden, einer Rückwand und einer Vorderwand, gebildeten Grundkörper sowie eine Bodenwand zur Bildung eines Aufnahmeraumes für die stabförmigen Produkte, wobei der Behälter zumindest teilweise, vorzugsweise im Wesentlichen vollständig, aus einem elektrisch leitfähigen Werkstoff gebildet ist, wobei der leitfähige Werkstoff ein Stoffgemisch aus einem Grundstoff, nämlich einem Kunststoff, und mindestens zwei, insbesondere genau zwei, elektrisch leitenden Additiven ist, sowie ein elektrostatisch dissipatives Material, insbesondere zur Herstellung eines solchen Behälters, bestehend aus einem Grundstoff, insbesondere einem Polymer, und mindestens zwei, insbesondere genau zwei, elektrisch leitenden Additiven.

Derartige Behälter kommen in der Tabak verarbeitenden Industrie zum Einsatz. In der Tabak verarbeitenden Industrie, die auch die Verarbeitung, Bearbeitung und Herstellung von nicht Tabak enthaltenden Artikeln umfasst, werden Produktmassenströme aus stabförmigen Artikeln, insbesondere Zigaretten und Filtern, gefördert. Solche üblicherweise mehrschichtigen bzw. mehrlagigen Produktmassenströme werden z.B. am Ausgang von so genannten Makern für Zigaretten oder Filter gebildet. Die stabförmigen Artikel liegen in dem kontinuierlichen Produktmassenstrom mit ihrer Längsachse quer zur Förderrichtung. Diese Produktmassenströme oder Teile davon sollen zum Zwecke der Entkopplung nachgeschalteter Prozesse aus der Anordnung ausgeschleust, zwischengespeichert und wieder eingeschleust werden. Dazu wird der Produktmassenstrom portionsweise in Behälter gefüllt, welche später wieder entleert werden können.

Solche Anordnungen sind unter dem Begriff RTS ("Rod Transfer System") bekannt und dienen dazu, stabförmige Artikel, also z.B. Zigaretten, Filter, Filterstäbe und dergleichen, in einem mehrlagigen Massenstrom von einer ersten Station, z.B. einer Herstellungsmaschine für Zigaretten, zu einer zweiten Station, z.B. einer Packmaschine zu transportieren. Dabei kann es notwendig oder gewünscht sein, den Produktmassenstrom oder Teile davon vor dem Transport an die Zielstation zunächst auszuschleusen oder temporär zu entnehmen, um z.B. bestimmte Bearbeitungsschritte (z.B. Aushärten, Trocknen oder dergleichen) auszuführen und/oder um temporäre oder dauerhafte Leistungsunterschiede zwischen einer Herstellungsmaschine und einer Weiterverarbeitungsmaschine auszugleichen. Dazu werden der Anordnung bisher z.B. so genannte Schragenfüller und/oder Schragenentleerer zugeordnet. Bei bekannten Anordnungen werden die stabförmigen Artikel aus dem Produktmassenstrom über die Schragenfüller ausgeschleust und in Schragen gefüllt. Das Zurückführen der Artikel aus den Schragen in die Anordnung erfolgt entsprechend über die Schragenentleerer. Solche Lösungen erfordern zum einen erheblichen Bauraum und weisen entsprechend einen großen Footprint auf. Des Weiteren sind die Artikel durch das Umlagern erheblichen Belastungen ausgesetzt. Durch das Befüllen oder Entleeren der Schragen auch über Kopf kann es weiterhin zu so genannten Querfliegern kommen, die den Transportprozess mindestens beeinträchtigen, wenn nicht zu einer Unterbrechung führen.

Aus der GB 2 008 526 A ist eine Anordnung bekannt, bei der der Produktmassenstrom direkt in Behälter gefüllt wird bzw. aus den Artikeln der Produktmassenstrom gebildet wird. Dabei wird der Produktmassenstrom beim Transport durch die Anordnung aber quasi aufgelöst. Betrachtet man das Transportieren vom Produktmassenstrom in Richtung der zu füllenden Behälter, verändert sich die Höhe des Produktmassenstroms, die so genannte Stackhöhe, beim Übergang vom Produktmassenstrom in die Behälter um ein Mehrfaches. Mit anderen Worten liegen in den Behältern wesentlich mehr Artikel übereinander als im Produktmassenstrom. In umgekehrter Transportrichtung reduziert sich die Stackhöhe um ein Mehrfaches. Die Artikel werden damit durch das Umlagern einerseits und durch die hohe Stapelung in den Behältern große einer hohen Belastung ausgesetzt. Da in den hier verwendeten Behältern viele Artikel übereinander liegen und die Behälter prozessbedingt auf der Vorderseite offen sind, besteht das Risiko, dass bei manueller oder automatischer Handhabung dieser Behälter einzelne Artikel herausrutschen und anschließend vorstehen oder sogar herausfallen.

DE 10 2013 114 071 A1 (HAUNI MASCHINENBAU AG [DE]) (2015-06-18) offenbart einen Behälter zum Aufbewahren oder Aufnehmen bzw. Abgeben von stabförmigen Produkten aus der Tabak verarbeitenden Industrie. DE 102 59 498 A1 (BAYER AG [DE]) (2004-07-01) offenbart ein elektrostatisch dissipatives Material bestehend aus einer KunststoffKomponente und zwei elektrisch leitenden anorganischen Additiven.

Da bei der in der GB 2 008 526 A beschriebenen Anordnung die Artikel zum Portionieren, also dem Befüllen der Behälter, bzw. zur erneuten Bildung des Produktmassenstroms, also beim Entleeren der Behälter, teilweise mehrfach umgelagert werden müssen, so dass die Artikel erheblichen Belastungen und einer Fallhöhe ausgesetzt sind und/oder hohe Beschleunigungen und Kräfte auf die Artikel wirken, schlägt die deutschen Patentanmeldung 10 2014 116 578 vor, dass die Anordnung zum Fördern des Produktmassenstroms unter Beibehaltung der ursprünglichen Struktur und des ursprünglichen Querschnitts des zugeführten Produktmassenstroms ausgebildet und eingerichtet ist. Unter Beibehaltung der ursprünglichen Struktur und des ursprünglichen Querschnitts bedeutet, dass auch eine im Wesentlichen gleiche Struktur und ein im Wesentlichen gleicher Querschnitt mit eingeschlossen sind, da Produktmassenströme üblicherweise beim Transport geringfügigen Veränderungen ausgesetzt sein können. Eine Identische Struktur und ein identischer Querschnitt können naturgemäß nicht erreicht werden. Das Beibehalten bezieht sich des Weiteren darauf, dass der kontinuierliche Produktmassenstrom mindestens eingangsseitig beim ersten Förderelement und der portionierte/diskretisierte Produktmassenstrom in den Behältern ausgangsseitig beim zweiten Förderelement gleich sind. Anders ausgedrückt bilden die mit Artikeln gefüllten Behälter den zugeführten kontinuierlichen Produktmassenstrom ab, mit Ausnahme der diskreten Teilung des Produktmassenstroms durch Stirnwände der Behälter. Struktur bedeutet dabei, dass die Lage, die Packungsdichte, die Packhöhe, die Ausrichtung der Artikel sowie die lagenweise Anordnung als Artikelgebinde loser Artikel grundsätzlich bestehen bleibt.

Ein Produktmassenstrom im Sinne dieser Anmeldung besteht aus einer Mehrzahl von queraxial geförderten stabförmigen Gegenständen, wobei stets wenigstens drei stabförmige Artikel in einem losen Verband einander berührend, insbesondere abstandsfrei, und sich zumindest teilweise überdeckend in vertikaler Richtung übereinander liegen. Ein Produktmassenstrom ist weiterhin dadurch gekennzeichnet, dass die queraxial geförderten stabförmigen Artikel sich untereinander berühren, insbesondere über ihre jeweilige Mantelfläche zumindest in linienförmigem Kontakt stehen. Ein Produktmassenstrom zeichnet sich insbesondere bei kurvenfreier Förderung dadurch aus, dass die queraxial geförderten stabförmigen Artikel ohne Relativbewegung untereinander in einem hexagonalen Verband von wenigstens drei Lagen bewegt werden. Bei einem Produktmassenstrom sind zu jeder Zeit die stabförmigen Artikel in mehreren horizontalen Lagen übereinander angeordnet, insbesondere unter Umfangskontakt der stabförmigen Artikel.

Die Anordnung gemäß der DE 10 2014 116 578 umfasst ein erstes kontinuierlich und umlaufend angetriebenes Förderelement zum Fördern des Produktmassenstroms in vorzugsweise horizontaler oder leicht geneigter Transportrichtung T bzw. T_{R}, ein zweites kontinuierlich und umlaufend angetriebenes Förderelement zum Fördern von Behältern in horizontaler Transportrichtung T bzw. T_{R}, wobei die beiden Förderelemente im Wesentlichen die gleiche Förderrichtung aufweisen und das zweite Förderelement zum Fördern der Behälter in einer Transportebene E_{U} unterhalb der Transportebene E_{O} des ersten Förderelementes zum Fördern des Produktmassenstroms angeordnet ist, durch mehrere diskrete Behälter zum Aufnehmen oder Abgeben von Portionen des Produktmassenstroms, und durch einen durch eine Oberführung und eine Unterführung gebildeten Kanal zum Leiten des Produktmassenstroms aus der Transportebene E_{O} in die Transportebene E_{U} oder umgekehrt, aus, wobei der Kanal und die Behälter derart konstruktiv aufeinander abgestimmt sind, dass das Befüllen oder Entleeren der Behälter während des kontinuierlichen Transports von Behältern und Produktmassenstrom gewährleistet ist. Diskrete Behälter beschreiben in diesem Zusammenhang solche Behälter, die den Produktmassenstrom zunächst nur unterteilen, letztlich aber noch in seiner Struktur, Form und Größe, lediglich durch Wände des Behälters unterteilt, beibehalten. Diese Behälter, die jeweils einen Abschnitt des Produktmassenstroms nachbilden, können entnommen, gespeichert, und anschließend wieder zu der ursprünglichen Produktmassenstromform zusammengesetzt werden, und zwar ohne Umlagern der einzelnen Artikel. Dadurch, dass der Produktmassenstrom in der Struktur, also insbesondere auch in seiner der Formation bzw. des Verbandes, und in seinem Querschnitt beibehalten wird, ist auch die Belastung auf die einzelnen Artikel insbesondere in den Behältern reduziert. Mit dem Begriff "in vorzugsweise horizontaler oder leicht geneigter Transportrichtung" bezogen auf den Produktmassenstrom ist eine im Wesentlich horizontale Transportrichtung sowie eine Transportrichtung in einem Winkel kleiner 45° gemeint. Mit der erfindungsgemäßen Lösung kann auf so genannte Prozessspeicher zum Speichern/Puffern des Produktmassenstroms während des Behälterwechsels verzichtet werden. Die beschriebene Anordnung ist zusätzlich zur artikelschonenden Förderung/Portionierung auch einfach sowie platzsparend und kostengünstig aufgebaut. Da der Produktmassenstrom erfindungsgemäß ohne wesentliche Umlagerungen bei gleichbleibender Stackhöhe in die Behälter fließt, ist eine für die Produktverfolgung und das FiFo-Prinzip günstige höhere Granularität im Vergleich zu Schragen basierten Systemen gegeben.

Im Vordergrund der in der DE 10 2014 116 578 beschriebenen Vorrichtung steht das Diskretisieren/Portionieren des Produktmassenstroms unter Beibehaltung der ursprünglichen Struktur und des ursprünglichen Querschnitts. Das Fördern der Artikel innerhalb der Anordnung kann aber auch in umgekehrter erfolgen. Anders ausgedrückt ist das Befüllen der diskreten Behälter durch Umkehr der Förderrichtung der beiden Förderelemente auch reversibel, so dass die Anordnung mit der Entleerung der Behälter zur Bildung eines kontinuierlichen Produktmassenstroms führt.

Die in der DE 10 2014 116 578 beschriebenen Vorrichtung zum Einsatz kommenden Behälter sind üblicherweise aus Metall oder insbesondere aus Kunststoff wie beispielsweise Polystyrol (PS) oder Acrylnitril-Butadien-Styrol (ABS) hergestellt, da diese Materialen stabil und gleichzeitig leicht sowie kostengünstig sind.

Beim Entleeren der Behälter, d.h. beim Abgeben von Portionen des Produktmassenstroms tritt das Problem auf, dass bei bzw. nach dem Entleeren stabförmige Produkte in dem Behälter verbleiben, obwohl beim Entleeren der Behälter, das während des kontinuierlichen Transports von Behältern und Produktmassenstrom erfolgt, natürlich sämtliche stabförmige Produkte aus dem Behälter hätten entfernt werden sollen.

An Boden und/oder Wand des Behälters bleiben stabförmige Produkte hängen, da sich die Wände der Schragen und/oder die Produkte während des Herstellungs- und/oder Transportprozesses elektrostatisch aufgeladen haben. Ein solches elektrostatisches Feld bildet sich aufgrund des Umstandes, dass die Behälter aus Kunststoff, einem dielektrischen Material hergestellt sind, durch Reibung. Reibung tritt auf der einen Seite auf, wenn die stabförmigen Produkte in den Behälter gefüllt werden, wobei sie gegen die Wände und den Boden des Schragens reiben. Dabei laden sich Behälterwände bzw. -boden und stabförmige Produkte mit unterschiedlichen Ladungen auf, was zur Bildung eines elektrostatischen Feldes führt, das verhindert, dass sich die Behälter beim Entleervorgang vollständig entleeren lassen, wie eigentlich gewünscht. Eine weitere Aufladung erfolgt weiterhin dadurch, dass die Behälter auf ihrem Transport mit anderen Gegenständen, insbesondere aus Kunststoff in Berührung kommen. So sind zum Beispiel die Transportbänder zum einen der Zuführeinrichtung, zum anderen der Abtransporteinrichtung üblicherweise aus Kunststoff hergestellt. Durch die Reibung zwischen Behälter und Transportband entsteht wiederum elektrische Ladung.

Bislang wird diesem Problem Rechnung getragen, in dem die Behälter von einer Person kontrolliert oder eine optische Überwachungseinrichtung vorgesehen wird und ggf. verbliebene stabförmige Produkte manuell entfernt werden. Mit einem zunehmenden Grad an Automatisierung in der Produktion, fehlt es im gesamten Prozess jedoch zunehmend an Personen, die eine solche Kontrollfunktion und Entnahmetätigkeit ausüben könnten.

Es ist daher wünschenswert, sicherzustellen, dass nach dem Entleervorgang keine stabförmigen Produkte im Behälter verbleiben.

Für Behälter in der Tabak verarbeitenden Industrie schlägt die WO 2011/090395 A1 zwei Maßnahmen zur Verringerung des statischen Aufladung vor, zum einen das Einblasen ionisierter Druckluft in den Boden der Behälter zum Neutralisieren der Ladung, zum anderen das Verwenden einer Einlage oder eines Einsatzes aus einem leitenden Material im Inneren des Behälters.

Die DE 10 2013 208 407 A1 schlägt vor, dass an den Transportwegen der Entleerungsvorrichtung für die verwendeten Behälter und in der Entleerungsposition der Behälter jeweils eine lonisierungseinrichtung zur Verminderung, insbesondere Beseitigung, von elektrostatischen Ladungen auf den Oberflächen der Behälter und der in den Behältern enthaltenden Produkten vorgesehen ist, derart, dass die Behälter und die Produkte mittels lonisierungseinrichtungen mit einem lonisierungsstrom beaufschlagt werden.

Das Vorsehen einer Einrichtung zum Einblasen ionisierter Druckluft ist konstruktiv aufwendig, mit erhöhten Kosten verbunden und zudem letztlich nicht hinreichend sicher. Auch das Vorsehen von Metalleinlagen oder Metalleinsätzen ist aufwendig, da bei der Herstellung der Behälter ein zusätzlicher Arbeitsschritt des Einsetzens der Einlage erforderlich ist, was wiederum die Kosten erhöht. Auch besteht die Gefahr, dass sich Einlage oder Einsatz vom Schragen lösen, in die Maschinen geraten und zu Beschädigungen führen.

Es wurden auch Versuche unternommen, die Behälter aus Stahl- oder Aluminiumblech herzustellen. Es zeigten sich jedoch im laufenden Betrieb Probleme hinsichtlich einer Langzeitformstabilität, verbogene Seitenwände führten zu Störungen in den Füll- und Entleereinrichtungen. Derartige Behälter waren zudem teurer und schwerer als Kunststoffbehälter.

Es wurden auch erste Versuche unternommen, die Behälter aus elektrisch leitfähigem Kunststoff herzustellen. Eine geeignete Gruppe elektrisch leitfähiger Kunststoffe sind Kunststoffe, die ein elektrisch leitendes Additiv enthalten. Hierzu wurden bereits anorganische Additive oder alternativ organische Additive vorgeschlagen. Geeignete anorganische Additive sind prinzipiell Leitfähigkeitsruß, Graphit, Edelstahl, Kupfer, Aluminium, Silber oder Eisenoxid. Es wurde weiterhin vorgeschlagen, Edelstahl in Form von Fasern, Kupfer oder Aluminium in Form von Teilchen sowie Silber, Leitfähigkeitsruß oder Graphit in Form von Pulver dem Kunststoff zuzusetzen.

Alternativ wurde bereits die Verwendung von Kohlenstofffasern vorgeschlagen. Solche sogenannten kohlenstofffaserverstärkten Kunststoffe (CFK = Carbon-faserverstärkter Kunststoff) weisen neben der gewünschten elektrischen Leitfähigkeit eine hohe Zugfestigkeit auf. Da elektrische Leitfähigkeit, Zugfestigkeit, Biegeelastizität und Steifigkeit durch die Kohlenstofffasern verliehen werden, sind diese Eigenschaften abhängig von der Faserrichtung. Diese aus dem Flugzeugbau und Fahrzeugbau bekannten Eigenschaften könnte man sich bei der Herstellung der Schragen zunutze machen.

In einer weiteren Alternative wurde vorgeschlagen, dass das elektrisch leitende Additiv ein organisches elektrostatisch dissipatives Additiv ist, insbesondere ausgewählt aus mindestens einer Substanz der Gruppe bestehend aus Polyanilinen, Polyurethanen, Polyethylendioxythiophenen und Polyacrylaten.

Gemäß der EP 2 805 633 A1 wurde schließlich vorgeschlagen, dass der elektrisch leitfähige Kunststoff ein intrinsisch leitfähiges Polymer, insbesondere ein dotiertes intrinsisch leitfähiges Polymer (intrinsic conductive polymers = ICP) ist. Unter den intrinsisch leitfähigen Polymeren sind insbesondere das cis-Polyactetylen (cis-PA), das trans-Polyacetylen (trans-PA), Poly(paraphenylen) (PPP), Polythiophen, Polypyrrol, Poly(para-phenylen-vinylen) (PPV) und Polyanilin (PANi) zu nennen.

Die in den vorstehend aufgezeigten vier alternativen Gruppen von elektrisch leitfähigen Kunststoffen mit oder ohne Additiv weisen jedoch für die vorliegende Aufgabe verschiedene Nachteile auf, so unterliegen, insbesondere die metallischen Additive einer mehr oder weniger starken Korrosion. Die anorganischen Additive Graphit, Leitfähigkeitsruß, Aluminium und Eisenoxid bringen eine dunkle bis schwarze Einfärbung der Behälter bzw. Schragen mit sich. Zudem sind diese Additive nicht abriebfest, was zu einer unerwünschten Verschmutzung von Fördereinrichtungen und zu einer unzulässigen Kontaminierung der Produkte führt. Kohlenstofffaserverstärkten Kunststoffe, wie sie aus dem Flugzeugbau und Fahrzeugbau bekannt sind, werden dort aufwendig mehrlagig in Form von Matten verarbeitet und/oder im Wickelfahren gebildet, eine spritzgusstechnische Herstellung eines Behälters scheidet somit aus. Bei der Verwendung von organischem elektrostatisch dissipativen Additiven und intrinsisch leitfähigen Polymeren mangelt es dem Werkstoff an einer hinreichenden Zug- und Biegefestigkeit, wenn das Additiv in einer Menge eingesetzt wird, die erforderlich ist, um eine ausreichende elektrostatische Ableitung zu gewährleisten. Weiterhin mangelt es einigen Stoffen an einer U.S. FDA-Zulassung und/oder der entsprechenden europäischen Verordnung (EU) 1935/2004.

Während aus anderen Anwendungen bekannt ist, dass Werkstoffe unter Verwendung von Kohlenstofffasern eine für die erforderlichen Zwecke ausreichende Ableitung aufweisen, hat sich bei Untersuchungen der Anmelderin herausgestellt, dass für die vorliegende Anwendung im Bereich stabförmiger Artikel der tabakverarbeitenden Industrie, die mittels Kohlenstofffasern als Additiv erreichte elektrostatische Ableitung gerade nicht ausreichend ist und stabförmige Artikel nach wie vor in den Behälter verbleiben, auch wenn die Messdaten der elektrischen Leitfähigkeit des Werkstoffes ein anderes Ergebnis prognostizieren.

Aufgabe der vorliegenden Erfindung ist es daher, einen Behälter zum Aufnehmen bzw. Abgeben von Portionen eines aus stabförmigen Artikeln der Tabak verarbeitenden Industrie gebildeten Produktmassenstroms zur Verfügung zu stellen, dessen vollständige Entleerung sichergestellt werden kann und der gleichzeitig einfach und kostengünstig herzustellen ist, wobei die Vorschriften der U.S. FDA und der entsprechenden europäischen Verordnung für Stoffe mit Lebensmittelkontakt vollumfänglich Berücksichtigung finden.

Diese Aufgabe wird erfindungsgemäß durch einen Behälter der eingangs genannten Art gelöst, wobei ein erstes elektrisch leitendes Additiv ein anorganisches Additiv in Faserform, insbesondere ausgewählt aus mindestens einer Substanz der Gruppe bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer oder ein intrinsisch dotiertes Polymer ist.

Es hat sich überraschend herausgestellt, dass durch die Kombination zweier bestimmter Additive, nämlich durch Kombination eines anorganischen Additivs in Faserform mit einem intrinsisch leitfähigen Polymer oder einem intrinsisch dissipativen Polymer, die dem Grundstoff zugesetzt wird, ein Werkstoff erhalten wird, der bewirkt, dass bei daraus hergestellten Behältern für die tabakverarbeitende Industrie beim Entleervorgang keine stabförmigen Artikel im Behälter zurückbleiben. Vielmehr weist der Werkstoff eine elektrostatische Ableitung auf, die ausreichend ist, die elektrostatische Anziehung zwischen Behälter und stabförmigen Artikeln derart zu verringern, dass sie nicht mehr ausreicht, um die stabförmigen Artikel im Behälter zurückzuhalten, indem nämlich auch eine elektrostatische Ableitung der in den stabförmigen Artikeln vorhandenen Ladung erfolgt. Wie im Rahmen der vorliegenden Erfindung gefunden wurde, ist es, da die stabförmigen Artikel die Behälterwände nicht großflächig, sondern nur punktuell berühren, wichtig, dass eine elektrostatische Ableitung großflächig erfolgt. Dabei sorgt insbesondere ein intrinsisch dissipatives Additiv in der Kombination mit den anorganischen Additiven in Faserform, die besonders gut elektrisch leitfähig sind, dafür, dass die Leitfähigkeit des Additivs in Faserform, die nur in unmittelbarer Umgebung der Faser ihre Wirkung entfaltet, auf den gesamten Werkstoff verteilt wird.

So erfüllt die erfindungsgemäße Kombination der beiden Additive mit dem Grundstoff die weiteren Anforderungen an einen Behälter der tabakverarbeitenden Industrie in Bezug auf elektrische Ableitfähigkeit bei zugleich hinreichender Stabilität und Biegeelastizität. Es ist kein Aufbringen einer zusätzlichen Schicht, einer Einlage oder dergleichen erforderlich. Der Behälter kann konstruktiv sehr einfach hergestellt werden. Ein elektrisch leitfähiger Kunststoff im Sinne der Erfindung ist dabei ein Kunststoff, der eine elektrische Leitfähigkeit von mindestens 10⁻¹⁰ S·cm⁻¹ aufweist.

Dies gelingt besonders gut, wenn der gesamte Behälter aus elektrisch leitfähigem Kunststoff gebildet ist. Vorteilhafterweise ist der Behälter dabei einstückig ausgebildet und im Spritzgussverfahren hergestellt. Auf diese Weise wird ein sehr stabiler Behälter erhalten, der gleichzeitig kostengünstig in der Herstellung ist, so können bereits vorhandene Formen zur Behälterherstellung weiter verwendet werden, da sich lediglich das Material ändert, während die Behälterform identisch bleibt.

Der vorstehend für die erfindungsgemäßen Behälter beschriebene Werkstoff ist jedoch auch für andere Anwendungsbereiche, in denen eine elektrostatische Ableitung erforderlich ist, geeignet. Solche Anwendungsbereiche können weitere Maschinenteile in der tabakverarbeitenden Industrie, insbesondere bei Transporteinrichtungen oder Transportvorrichtungen wie z.B. Förderbänder oder Förderketten sein, aber auch gänzlich andere Anwendungsgebiete und Industrien sind denkbar. So stellt die vorliegende Erfindung des Weiteren ein elektrostatisch dissipatives Material zur Verfügung, das aus einem Grundstoff, nämlich einem Kunststoff, und mindestens zwei, insbesondere genau zwei, elektrisch leitenden Additiven besteht, wobei ein erstes elektrisch leitendes Additiv ein anorganisches Additiv in Faserform, insbesondere ausgewählt aus mindestens einer Substanz der Gruppe bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer oder ein intrinsisch dissipatives Polymer ist.

In einer besonders geeigneten Ausführungsform ist der Grundstoff des leitfähigen Werkstoffes bzw. des elektrostatisch dissipativen Materials ein Polystyrol. Polystyrol hat sich als Werkstoff für Behälter in der tabakverarbeitenden Industrie besonders bewährt, da er leicht und formstabil ist und sich darüber hinaus gut im Spritzgussverfahren verarbeiten lässt.

Für das erste elektrisch leitende Additiv kommt als anorganisches Additiv in Faserform mindestens eine Substanz der Gruppe bestehend aus Kohlenstoff, Edelstahl, und Nichteisenmetall zum Einsatz. Als Nichteisenmetallfasern sind zum Beispiel Kupferfasern möglich. Metalle mit hoher elektrischer Leitfähigkeit sind besonders bevorzugt, wobei auch die weiteren Eigenschaften mit dem Behälter kompatibel sein müssen.

Für die vorliegende Erfindung sind Kohlenstofffasern besonders bevorzugt. Sie sind leicht und ermöglichen eine schnelle Ableitzeit für die elektrostatische Ladung. Sie liefern ferner in dem Stoffgemisch eine optisch ansprechende Farbe, und das mit Kohlenstofffasern erhaltene Stoffgemisch ist homogen und lässt sich im Spritzgussverfahren gut verarbeiten. Auch ist das so erhaltene Stoffgemisch, wenn gewünscht, einfärbbar, so dass neben der bei Kohlenstofffasern üblichen Anthrazitfärbung auch Einfärbungen in zum Beispiel weiß oder blau möglich sind. Im Falle der Einfärbung wird vorzugsweise noch ein Schlichtmittel zugegeben, das die Farbechtheit der fertigen Produkte erhöht. Geeignete Schlichtmittel sind dem Fachmann geläufig. Als Schlichtmittel kommen insbesondere Substanzen aus der Gruppe der Polyacrylnitrile (PAN) zum Einsatz.

Erfindungsgemäß ist das zweite elektrisch leitende Additiv ein intrinsisch leitfähiges Polymer, insbesondere ein dotiertes intrinsisch leitfähiges Polymer, wobei hierunter auch eine Mischung verschiedener intrinsisch leitfähiger Polymere zu verstehen ist. Besonders bevorzugt sind die Polymere dotiert, wodurch die elektrischen Leitfähigkeiten des Kunststoffs um mehrere Zehnerpotenzen erhöht werden können. Das intrinsisch leitfähige Polymer ist vorzugswiese mit einem Gewichtsanteil von 8 % bis 15 % enthalten. Ein Gewichtsanteil von 9 % bis 10 % ist besonders bevorzugt. Ein solcher Gewichtsanteil an intrinsisch leitfähigem Polymer sorgt zum einen für eine gute elektrostatische Ableitung der Ladung sowohl aus dem Behälter wie auch aus den enthaltenen stabförmigen Artikeln, stellt auf der anderen Seite sicher, dass die mechanischen Eigenschaften des Behälters nicht beeinträchtigt werden. Schließlich ist ein solcher bevorzugter Anteil auch unter finanziellen Gesichtspunkten akzeptabel.

Intrinsisch leitfähige Polymere, auch leitfähige Polymere genannt, sind Kunststoffe (organische Polymere) mit elektrischer Leitfähigkeit, die der von Metallen entspricht oder sie einen Halbleiter sein lässt.

Als intrinsisch leitfähige Polymere können insbesondere eingesetzt werden: Polyaniline (PANI), Polythiophene (PT), Polypyrrole (PPY), Polyacetylene (PAC; und zwar cis-Polyactetylene(cis-PA) und trans-Polyacetylene (trans-PA)), Poly(3,4-ethylendioxythio-phene) (PEDOT), Poly(1,4-phenylen) (PPP), Poly(p-phenylenvinylene) (PPV) und seine an 2- und/oder 5-Position im aromatischen Ring substituierten Derivate sowie Polythiophene. Polyaniline sind ganz besonders geeignet sind. Werden die Polyaniline mit organischen Säuren, die große und sperrige Anionen wie Camphersulfonsäure oder para-Dodecylphenylsulfonsäure aufweisen, protoniert, können die Polyaniline in organischen Lösemitteln wie *meta*-Kresol gelöst werden, was die Verarbeitung zu Polymerblends mit hoher elektrischer Leitfähigkeit besonders gut möglich macht.

Gemäß einer bevorzugten Ausgestaltung der Erfindung wird bevorzugt ein intrinsisch dissipatives Polymer eingesetzt. Intrinsisch leitfähige Polymere (intrinsic conductive polymers = ICP) weisen eine Leitfähigkeit auf, die denen von Metallen gleicht. Es kann jedoch bei bestimmten Herstellungsprozessen vorkommen, dass diese Materialien nicht ausreichend oxidationsstabil sind und während des Herstellungsprozesses ihre Leitfähigkeit verlieren. In solchen Fällen kann ein intrinsisch (lediglich) ableitendes Polymer (intrinsic discharging polymer = IDP) eingesetzt werden, dass seine wenn auch wesentlich geringere Leitfähigkeit als die der ICPs auch während des Herstellungsprozesses nicht verliert.

Das elektrisch leitende Additiv in Faserform ist vorzugsweise mit einem Gewichtsanteil von 3 % bis 11 %, insbesondere von 6 % bis 8 %, und besonders bevorzugt von ungefähr 7 % in dem Werkstoff enthalten. Bei diesen Gewichtsanteilen ist zum einen eine gute Leitfähigkeit gegeben, zum anderen sind die mechanischen Eigenschaften des Werkstoffes bzw. des elektrostatisch dissipativen Materials für den Einsatzbereich nicht oder zumindest nicht relevant beeinträchtigt. Die bevorzugten Gewichtsanteile können sich auch nach Material des anorganischen Additivs in Faserform unterscheiden. So ist im Falle von Kohlenstofffasern ein Gewichtsanteil von 6 % bis 12 %, insbesondere von 8 % bis 10 % besonders bevorzugt, während im Falle von Stahlfasern ein Gewichtsanteil von 2 % bis 5 %, insbesondere von 3 % bis 4 % besonders günstig ist.

Vorteilhafterweise weist das anorganisches Additiv in Faserform, eine Faserlänge von mehr als 0,02 Millimeter und weniger als 20 Millimeter, vorzugsweise weniger als 2 Millimeter, besonders bevorzugt weniger als 0,2 Millimeter auf. Bei dieser Faserlänge ist die Verarbeitbarkeit des Werkstoffes im Spritzguss besonders gut möglich und eine besonders homogene Verteilung der Fasern im Werkstoff bzw. im elektrostatisch dissipativen Material gegeben. Die Fasern können insbesondere geschnitten oder gemahlen sein.

Weiterhin ist es vorteilhaft, wenn dem Werkstoff bzw. dem Material ein Haftvermittler zugesetzt wird. Der Haftvermittler sorgt dafür, dass die Fasern besonders gut in der Kunststoffmatrix haften. Ein Gewichtsanteil von weniger als 0,2 % im Werkstoff bzw. im Material ist besonders geeignet.

Besonders geeigneter Weise ist der Behälter zum Aufnehmen bzw. Abgeben von Portionen eines aus stabförmigen Artikeln der Tabak verarbeitenden Industrie gebildeten Produktmassenstroms ausgebildet, wobei die Höhe des Behälters bzw. des Aufnahmeraums im Wesentlichen der Höhe des zu portionierenden bzw. des zu bildenden Produktmassenstroms, nämlich insbesondere 80-120mm, entspricht.

Ein solcher Behälter ermöglicht das Diskretisieren/Portionieren des Produktmassenstroms mit einer gleichbleibenden Stackhöhe. Solche auf fünf Seiten mindestens teilweise geschlossenen Behälter ermöglichen einen hochdynamischen Transport, ohne dass Artikel verrutschen. Des Weiteren ermöglicht der erfindungsgemäße Behälter eine einfache Kapselung, wodurch die Lagerfähigkeit der Artikel verbessert wird. Die Behälter können im Leerzustand durch die genannte Ausbildung auch über Kopf gelagert werden, wodurch die Kontamination verhindert wird. Dadurch, dass der erfindungsgemäße Behälter seitlich und von unten geschlossen ist, also ausschließlich auf der Oberseite offen ist, wird das Vorstehen oder Herausfallen der Artikel verhindert und die Verfahrenssicherheit verbessert. Durch den geschlossenen Aufbau können die Behälter zudem beim automatischen Handling mit wesentlich höheren Beschleunigungen transportiert werden.

Weitere besonders geeignete Maße für den Behälter betragen zum Beispiel 711,2 mm als Länge, 130 mm oder 135 mm als Höhe und 120 mm, 150 mm oder 200 mm als Breite.

Vorteilhafterweise sind die Stirnwände mindestens teilweise offen ausgebildet, nämlich geschlitzt, derart, dass der Behälter kollisionsfrei in einer dafür vorgesehenen Anordnung förderbar ist.

Eine Anordnung, die zum Fördern stabförmiger Artikel der tabakverarbeitenden Industrie mit erfindungsgemäßen Behältern ausgebildet ist, zeichnet sich durch ein erstes kontinuierlich und umlaufend angetriebenes Förderelement zum Fördern des Produktmassenstroms in vorzugsweise horizontaler oder leicht geneigter Transportrichtung T bzw. T_{R}, ein zweites kontinuierlich und umlaufend angetriebenes Förderelement zum Fördern von Behältern in horizontaler Transportrichtung T bzw. T_{R}, wobei die beiden Förderelemente im Wesentlichen die gleiche Förderrichtung aufweisen und das zweite Förderelement zum Fördern der Behälter in einer Transportebene E_{U} unterhalb der Transportebene E_{O} des ersten Förderelementes zum Fördern des Produktmassenstroms angeordnet ist, durch mehrere diskrete Behälter zum Aufnehmen oder Abgeben von Portionen des Produktmassenstroms, und durch einen durch eine Oberführung und eine Unterführung gebildeten Kanal zum Leiten des Produktmassenstroms aus der Transportebene E_{O} in die Transportebene E_{U} oder umgekehrt, aus, wobei der Kanal und die Behälter derart konstruktiv aufeinander abgestimmt sind, dass das Befüllen oder Entleeren der Behälter während des kontinuierlichen Transports von Behältern und Produktmassenstrom gewährleistet ist. Diskrete Behälter beschreiben in diesem Zusammenhang solche Behälter, die den Produktmassenstrom zunächst nur unterteilen, letztlich aber noch in seiner Struktur, Form und Größe, lediglich durch Wände des Behälters unterteilt, beibehalten. Diese Behälter, die jeweils einen Abschnitt des Produktmassenstroms nachbilden, können entnommen, gespeichert, und anschließend wieder zu der ursprünglichen Produktmassenstromform zusammengesetzt werden, und zwar ohne Umlagern der einzelnen Artikel. Dadurch, dass der Produktmassenstrom in der Struktur, also insbesondere auch in seiner der Formation bzw. des Verbandes, und in seinem Querschnitt beibehalten wird, ist auch die Belastung auf die einzelnen Artikel insbesondere in den Behältern reduziert. Mit dem Begriff "in vorzugsweise horizontaler oder leicht geneigter Transportrichtung" bezogen auf den Produktmassenstrom ist eine im Wesentlich horizontale Transportrichtung sowie eine Transportrichtung in einem Winkel kleiner 45° gemeint. Mit der erfindungsgemäßen Lösung kann auf so genannte Prozessspeicher zum Speichern/Puffern des Produktmassenstroms während des Behälterwechsels verzichtet werden. Eine solche Anordnung ist zusätzlich zur artikelschonenden Förderung/Portionierung auch einfach sowie platzsparend und kostengünstig aufgebaut. Da der Produktmassenstrom ohne wesentliche Umlagerungen bei gleichbleibender Stackhöhe in die Behälter fließt, ist eine für die Produktverfolgung und das FiFo-Prinzip (first in-first out) günstige Granularität gegeben.

Dem Förderelement zum Fördern der Behälter sind dabei Mittel zum Ausüben einer Relativbewegung zwischen einer Bodenwand des Behälters und dem durch Seitenwände und Stirnwände gebildeten Grundkörper des Behälters zugeordnet. Dadurch können die Artikel des Produktmassenstromes quasi abgeholt werden, ohne dass die Artikel einer Fallhöhe ausgesetzt sind. Durch die Relativbewegung kann der Produktmassenstrom auf einfache Weise diskretisiert/portioniert werden, indem die Stirnwände der Behälter in den Produktmassenstrom eintauchen.

In einer bevorzugten Weiterbildung ist die Bodenwand relativ zum Grundkörper entlang von Führungen bewegbar ausgebildet.

Ein Mittel zum Ausüben einer Relativbewegung in der vorstehen beschriebenen Anordnung kann ein Mittel zum Absenken der Bodenwand des Behälters relativ zum Grundkörper sein. Ist die Bodenwand des Behälters also relativ zum Grundkörper bewegbar ausgebildet, können die Grundkörper ausschließlich horizontal weiter gefördert werden, während das Befüllen der Behälter durch das allmähliche Absenken der Bodenwand erfolgt. Der Vorgang ist mit dieser Ausführungsform besonders gut reversibel auszuüben.

Alternativ kann das Mittel zum Ausüben einer Relativbewegung ein Mittel zum Anheben des Grundkörpers relativ zur Bodenwand sein. Bei dieser Ausführung werden die Grundkörper der Behälter allmählich angehoben, während die Bodenwand ausschließlich horizontal weiter gefördert wird. Dies führt zu einer besonders gleichmäßigen Befüllung der Behälter.

Eine zweckmäßige Weiterbildung zeichnet sich dadurch aus, dass die Behälter vertikal stapelbar ausgebildet sind. Dadurch sind eine platzsparende Lagerung und insbesondere auch ein Blockhandling gewährleistet.

Zweckmäßigerweise ist mindestens eine der Seitenwände mindestens teilweise transparent ausgebildet. Damit wird die Überwachung der Diskretisierung durch eine Bedienperson und/oder optische Überwachungssysteme verbessert. Es kann zudem vorgesehen sein, dass die Anzahl und/oder die Qualität der stabförmigen Artikel mittels einer optischen Aufnahmeeinrichtung erfasst werden.

In einer weiteren vorteilhaften Ausgestaltung ist mindestens eine der Seitenwände in ihrer Position verstellbar ausgebildet, so dass es möglich ist, die Breite des Behälters zu variieren. Auf diese Weise ist es möglich, die Behälter ohne Schwierigkeiten an unterschiedliche Längen von zu transportierenden/zu lagernden stabförmigen Produkten anzupassen.

Insbesondere ist mindestens eine der beiden Seitenwände relativ zu der anderen Seitenwand zur Veränderung des Abstandes zwischen den Seitenwänden verstellbar und/oder positionierbar ausgebildet. Mit dieser Ausgestaltung der Behälter ist das Diskretisieren eines Produktmassenstroms in einzelne Portionen bzw. Bilden des Produktmassenstroms aus den Portionen auf besonders flexible Weise gewährleistet, da für jedes Artikelformat ein optimaler Abstand zwischen Artikel und Seitenwand einstellbar ist. Anders ausgedrückt ermöglicht der veränderliche Abstand zwischen den beiden Seitenwänden eines Behälters eine verbesserte Formatflexibilität.

Vorzugsweise sind beide Seitenwände verstellbar und/oder positionierbar ausgebildet, derart, dass die Seitenwände aufeinander zu und voneinander weg bewegbar ausgebildet sind. Durch die Verstellbarkeit beider Seitenwände vergrößert sich zum einen der Verstellbereich. Zum anderen erfolgt die Verstellung symmetrisch, was die Positionierung der Behälter und deren Förderung und Führung innerhalb der Anordnung optimiert.

Eine bevorzugte Weiterbildung ist dadurch gekennzeichnet, dass jede Seitenwand zum automatischen Verstellen und/oder Positionieren ausgebildet und eingerichtet ist. Mit der automatischen Verstellbarkeit und/oder Positionierung wird eine zeitsparende Möglichkeit geschaffen, die Behälter an das geforderte/gewünschte Artikelformat anzupassen. Einfach ausgedrückt können die Formatwechselzeiten durch die erfindungsgemäße Ausbildung reduziert werden.

Eine Verstellbarkeit kann zum Beispiel dadurch erreicht werden, dass eine Seitenwand oder beide Seitenwände in Querrichtung verschiebbar ausgebildet ist bzw. sind. Eine andere Möglichkeit besteht darin, in der Bodenwand verschiedene voneinander beabstandete Nuten vorzusehen, in die die Seitenwand eingesetzt werden kann.

Vorteilhafterweise ist der Grundkörper mehrteilig ausgebildet ist, wobei die einzelnen Teile des Grundkörpers durch Klemm- und/oder Steckverbindungen lösbar miteinander verbunden sind. Mit der Mehrteiligkeit wird zum Ausdruck gebracht, dass der Grundkörper aus mindestens zwei Teilen gebildet ist. Durch die Mehrteiligkeit ist die Formatflexibilität bezüglich der Abstandsveränderung der Seitenwände gewährleistet. Mit solchen einfachen Klippverbindungen ist ein einfacher und insbesondere einfach und kostengünstig montierbarer Behälter geschaffen, der die automatische Verstellbarkeit und/oder Positionierung der Seitenwände wesentlich vereinfacht.

Vorteilhafterweise weisen die Seitenwände und die Stirnwände im Wesentlichen die gleiche Höhe H auf, wobei die Länge L der Seitenwände ein Mehrfaches der Breite B der Stirnwände beträgt.

Eine besonders vorteilhafte Ausführungsform ist dadurch gekennzeichnet, dass der Grundkörper wenigstens dreiteilig ausgebildet ist, nämlich zwei vorzugsweise winkelförmige Hauptteile, die jeweils eine Seitenwand, Stirnwandsegmente der beiden Stirnwände sowie Bestandteile der Bodenwand umfassen, sowie ein U-förmiges Sicherungsteil, das Stirnwandsegmente der beiden Stirnwände sowie ein Sicherungsmittel umfasst, umfasst. Die erfindungsgemäße Dreiteiligkeit des Grundkörpers ermöglicht einerseits ein einfaches Verändern des Abstandes der beiden Seitenwände durch Bewegen eines Hauptteils oder beider Hauptteile zueinander und andererseits eine einfache und sichere Verriegelung der beiden Hauptteile mittels des Sicherungsteils in einer definierten Position der beiden Hauptteile zueinander.

Vorteilhafterweise sind die die Bodenwand bildendenden Bestandteile aus fingerförmigen Querstreben gebildet, die in Transportrichtung T an den beiden Hauptteilen hintereinander und derart versetzt zueinander und in ihrer Längserstreckung quer zur Transportrichtung T ausgerichtet angeordnet sind, dass die Querstreben der einander gegenüberliegenden Hauptteile in montiertem Zustand kammartig ineinandergreifen, wobei die Querstreben auf der dem Aufnahmeraum zugewandten Innenseite mehrere beabstandet zueinander verlaufende Nuten zur Bildung eines Verstellrasters aufweisen, und die Nuten in ihrer Längserstreckung parallel zu den Seitenwänden der Hauptteile verlaufen. Diese Ausführungsform ermöglicht zum einen einen Formschluss zwischen den Querstreben beider Hauptteile, derart, dass eine translatorische Bewegung der beiden Hauptteile in Transportrichtung T verhindert wird, eine translatorische Bewegung der beiden Hauptteile quer zur Transportrichtung T zur Veränderung des Abstandes der beiden Seitenwände dagegen zugelassen wird. Des Weiteren bietet die kammartige Anordnung der Querstreben eine exakte Führung der beiden Hauptteile quer zur Transportrichtung T.

Eine bevorzugte Weiterbildung zeichnet sich dadurch aus, dass mindestens im Randbereich der Bodenwand zu den Stirnwänden an der Bodenwand eine Verdrehsicherung für die mittels der Querstreben ineinandergreifenden Hauptteile ausgebildet ist. Durch die Verdrehsicherung erhöht sich die Steifigkeit des Behälters. Anders ausgedrückt verhindert die Verdrehsicherung eine Verwindung der beiden Hauptteile gegeneinander, wodurch das automatische Verstellen vereinfacht wird, da ein Verkanten der beiden Hauptteile vermieden wird.

Vorteilhafterweise umfasst das Sicherungsmittel mindestens eine Längsstrebe und mindestens einen Träger mit einem Federelement, wobei die oder jede Längsstrebe an ihren und der oder jeder Träger an seinen entgegengesetzten Enden jeweils mit dem Bestandteil einer Stirnwand verbunden ist und parallel zu den Seitenwänden der Hauptteile verläuft, wobei der oder jeder Träger mit dem flexibel daran angeordneten Federelement vertikal unterhalb der oder jeder Längsstrebe angeordnet ist, so dass zwischen dem oder jedem Träger einerseits und der oder jeder Längsstrebe andererseits ein Abstand zur Aufnahme der die Bodenwand bildenden Querstreben ausgebildet ist. Diese Ausbildung ermöglicht ein einfaches Verriegeln und Entriegeln der Behälter. Genauer bildet das Sicherungsteil eine sichere aber einfach lösbare Verbindung der beiden Hauptteile, wodurch einerseits die Verstellung des Abstandes für ein bestimmtes Format sowie andererseits die Verriegelung im Betriebszustand der Behälter auf einfache und sichere Weise gewährleistet ist.

Vorzugsweise ist jede Längsstrebe in ihrer Form an die Form der Nuten in den Querstreben angepasst, derart, dass die oder jede Längsstrebe im Betriebszustand der Behälter in fluchtend verlaufenden Nuten der in Transportrichtung T hintereinanderliegenden Querstreben greift und mittels des Federelementes in den Nuten fixiert ist, während die oder jede Längsstrebe zum Lösen der Fixierung und zum Verstellen des Abstandes der Seitenwände gegen die Federkraft des Federelementes aus den Nuten anhebbar ist. Damit ist eine formschlüssige Verbindung durch die oder jede Längsstrebe einerseits und eine kraft- und reibschlüssige Verbindung durch das oder jedes Federelement andererseits geschaffen. Dies ermöglicht zum einen eine sichere Führung des Sicherungsteils gegenüber den Hauptteilen und zum anderen eine sichere Verriegelung der Hauptteile zueinander, die auf einfache und zuverlässige Weise automatisch entriegelbar und wieder verriegelbar ist.

Eine weitere besonders vorteilhafte Weiterbildung ist dadurch gekennzeichnet, dass der Grundkörper eine Bodenwand mit an entgegengesetzten Enden daran angeordneten Stirnwänden sowie zwei separate Seitenwände umfasst, wobei die Seitenwände jeweils über mindestens einen Verstellexzenter der Bodenwand beweglich zugeordnet sind. Diese Ausführungsform ermöglicht eine besonders effektive und zeitoptimierte Verstellung des Abstandes der Seitenwände.

Vorteilhafterweise ist der oder jeder Verstellexzenter durch eine Klemm- und/oder Steckverbindung mit der Bodenwand drehbar verbunden und umfasst einen nach oben weisenden Aufnahmedorn, der in eine entsprechende Öffnung in der Seitenwand eingreift, und einen nach unten weisenden Verstellzapfen, der mit einer externen Verstelleinrichtung in Wirkverbindung bringbar ist. Mit anderen Worten sind die Seitenwände jeweils auf mindestens einen Aufnahmedorn aufgesteckt und durch Betätigung des Verstellexzenters besonders einfach und schnell in ihrer Position veränderbar. Anders ausgedrückt ist die Formatwechselzeit für den Behälter auf ein Minimum reduziert.

Vorzugsweise sind jeder Seitenwand zwei Verstellexzenter zugeordnet, wobei jeder Verstellexzenter als Doppelexzenter ausgebildet ist. Das Vorsehen von zwei Verstellexzentern stellt eine gleichmäßige Verstellung und insbesondere eine Parallelverschiebung der Seitenwände zueinander sicher. Die Ausbildung als Doppelexzenter ermöglicht auf einfache Weise eine Verstellung der Seitenwände, indem eine Exzenterhälfte, nämlich der Verstellzapfen, durch einen Verstellmechanismus bewegbar ist, während die andere Exzenterhälfte, nämlich der Aufnahmedorn, die Seitenwand bewegt. Dadurch kann der Behälter während der Bewegung in einer Anordnung und/oder einer Verstellstation auf ein gewünschtes Formt eingestellt werden

Besonders bevorzugt ist der Abstand a zwischen der Drehachse des Verstellexzenters und der Mittelachse des Aufnahmedorns abweichend vom Abstand b zwischen der Drehachse des Verstellexzenters und der Mittelachse des Verstellzapfens gewählt. Durch das ungleiche Verhältnis der Abstände a und b lassen sich Übersetzungsverhältnisse der Verstellung konstruktiv festlegen.

Zweckmäßigerweise ist zwischen jedem Verstellexzenter und der Bodenwand ein Verriegelungsmechanismus ausgebildet. Dadurch kann die Position der Seitenwände zueinander fixiert bzw. verriegelt werden. Der Verriegelungsmechanismus sichert somit auf einfache sichere Weise die eingestellte Formateinstellung.

In einer besonders bevorzugten Weiterbildung sind die beiden Stirnwände unterschiedlich hoch ausgebildet und der kürzeren Stirnwand ist am freien Ende eine Leithilfe zugeordnet. Diese Ausführung, bei der die Leithilfe vorzugsweise geringfügig höher steht als die längere Stirnwand, unterstützt das reibungslose und schonende Befüllen der Behälter, indem direkt auf die freien, nach oben in Richtung des Produktmassenstroms weisenden Kanten geleitete Artikel in den Aufnahmeraum des jeweiligen Behälters geleitet werden.

Wie vorstehend ausgeführt ist es sehr vorteilhaft, wenn die Behälter aus einem elektrisch leitfähigen Werkstoff bestehen, da somit eine Ableitung der durch Reibung entstehenden Ladung möglich ist. Um den gewünschten Effekt zu erzielen ist es weiterhin erforderlich, dass die Ladung aus bzw. von dem Behälter abgeleitet wird.

Maschinen und Einrichtungen in der Tabak verarbeitenden Industrie weisen regelmäßig ein Maschinengrundgestell aus Stahl oder Aluminium auf, an dem die einzelnen Komponenten und Baugruppen sowie Einrichtungen angebracht sind. Dieses Maschinengrundgestell ist stets geerdet, es ist somit gut geeignet, die entstandene Ladung abzuleiten. Dazu ist es erforderlich, zumindest zeitweise eine leitende Verbindung zwischen einem Behälter und dem Maschinengrundgestell herzustellen. Vorteilhaft wird diese durch mindestens ein ladungsabführendes Element, bspw. eine Metallbürste oder ein bewegbares Federblech, erreicht, das an der Zuführeinrichtung, an der Entleerstation, an der Abtransporteinrichtung und/oder an der Übergabeeinrichtung angebracht ist.

Besonders bevorzugte Ausführungsformen werden anhand der beigefügten Zeichnung näher erläutert. In der Zeichnung zeigt:
- Fig. 1: eine schematische Darstellung einer ersten Ausführungsform der erfindungsgemäßen Anordnung in Seitenansicht,
- Fig. 2: eine schematische Darstellung eines Behälters, der an die Anordnung gemäß Figur 1 angepasst ist,
- Fig. 3: eine schematische Darstellung einer Unterführung zur Anordnung gemäß Figur 1,
- Fig. 4: eine schematische Darstellung einer weiteren Ausführungsform der erfindungsgemäßen Anordnung in Seitenansicht,

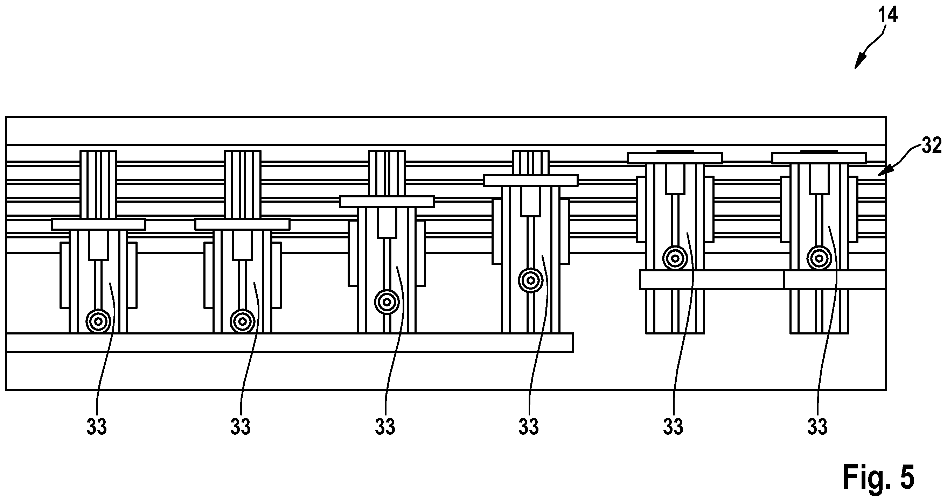

- Fig. 5: eine schematische Darstellung eines Mittels zum Absenken der Bodenwände der Behälter in der Anordnung gemäß Figur 4,
- Fig. 6: eine schematische Darstellung einer weiteren Ausführungsform der erfindungsgemäßen Anordnung in Seitenansicht,

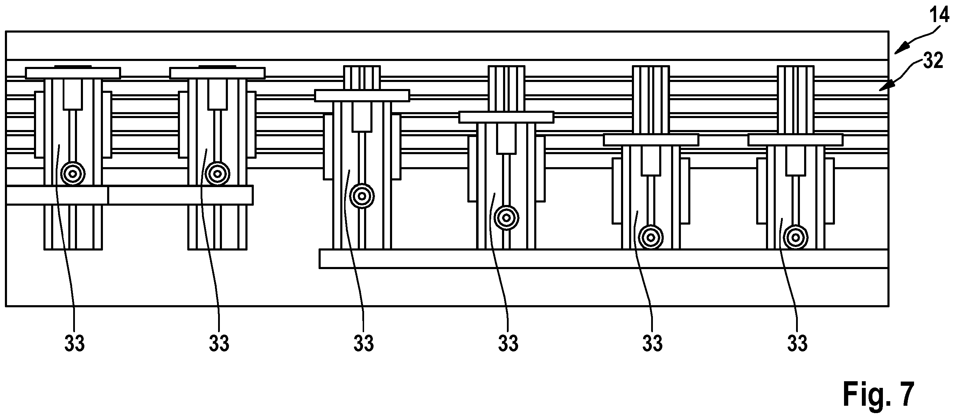

- Fig. 7: eine schematische Darstellung eines Mittels zum Anheben von Grundkörpern der Behälter in der Anordnung gemäß Figur 6,
- Fig. 8: eine stark vergrößerte Darstellung eines Ausschnitts einer weiteren Ausführungsform des Behälters, und
- Fig. 9: eine vergrößerte Darstellung zur Ausbildung der Stirnwände eines Behälters.

Die in der Zeichnung dargestellten Anordnungen dienen zum Fördern von Zigaretten oder Filtern als stabförmige Artikel. Während des Förderns kann der kontinuierliche Produktmassenstrom in beliebig viele gleiche Portionen in Behältern diskretisiert/portioniert werden. In entsprechender und umgekehrter Weise kann aus den diskretisierten/ portionierten Portionen mit denselben Anordnungen auch wieder ein kontinuierlicher Produktmassenstrom gebildet werden. Selbstverständlich können mit den Anordnungen auch andere stabförmige Artikel der Tabak verarbeitenden Industrie gefördert werden.

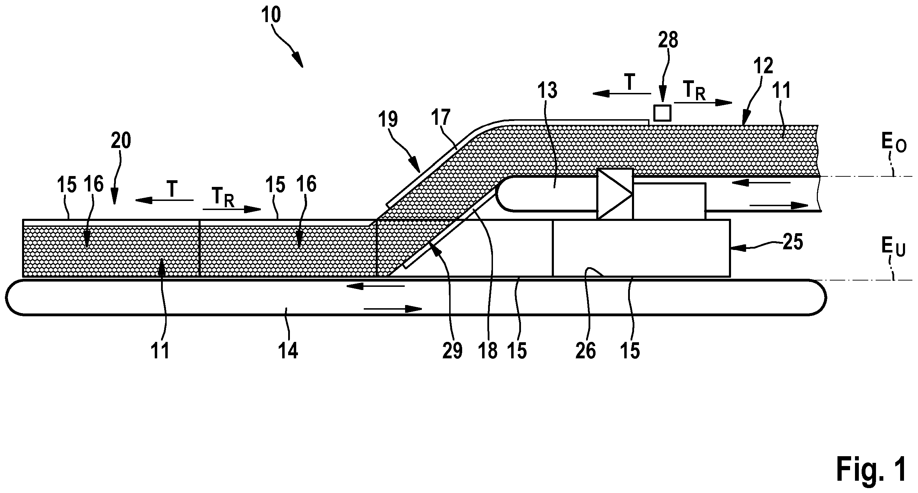

Die in den Figuren 1, 4 und 6 dargestellten Anordnungen 10 sind zum Fördern eines aus stabförmigen Artikeln 11 der Tabak verarbeitenden Industrie gebildeten Produktmassenstroms 12 ausgebildet und eingerichtet. Die Anordnung 10 umfasst ein erstes kontinuierlich und umlaufend angetriebenes Förderelement 13 zum Fördern des kontinuierlichen Produktmassenstroms 12 in vorzugsweise horizontaler oder leicht geneigter Transportrichtung T bzw. T_{R}, ein zweites kontinuierlich und umlaufend angetriebenes Förderelement 14 zum Fördern von Behältern 15 in horizontaler Transportrichtung T bzw. T_{R}, wobei die beiden Förderelemente 13, 14 im Wesentlichen die gleiche Förderrichtung aufweisen und das zweite Förderelement 14 zum Fördern der Behälter 15 in einer Transportebene E_{U} unterhalb der Transportebene E_{O} des ersten Förderelementes 13 zum Fördern des Produktmassenstroms 12 angeordnet ist. Des Weiteren umfasst die Anordnung 10 mehrere diskrete Behälter 15 zum Aufnehmen oder Abgeben von Portionen 16 des Produktmassenstroms 12 sowie einen durch eine Oberführung 17 und eine Unterführung 18 gebildeten Kanal 19 zum Leiten des kontinuierlichen Produktmassenstroms 12 aus der Transportebene E_{O} in die Transportebene E_{U} oder umgekehrt, wobei der Kanal 19 und die Behälter 15 derart konstruktiv aufeinander abgestimmt sind, dass das Befüllen oder Entleeren der Behälter 15 während des kontinuierlichen Transports von Behältern 15 und Produktmassenstrom 12 gewährleistet ist. Entscheidend bei der erfindungsgemäßen Anordnung 10 ist jeweils, dass sie derart ausgebildet und eingerichtet ist, dass das Fördern des Produktmassenstroms, unabhängig davon, ob als kontinuierlicher Produktmassenstrom 12 auf dem oberen ersten Förderelement 13 oder als ein aus nebeneinander in Behältern 15 liegenden Portionen 16 des Produktmassenstroms 12 gebildeter diskretisierter Produktmassenstrom 20 auf dem unteren zweiten Förderelement 14, unter Beibehaltung der ursprünglichen Struktur und des ursprünglichen Querschnitts des zugeführten kontinuierlichen Produktmassenstroms 12 erfolgt. Beide Produktmassenströme 12, 20 weisen im Wesentlichen die gleiche Struktur, also insbesondere die gleiche Formation bzw. den gleichen Verband, und den gleichen Querschnitt auf, zumindest, wenn der Produktmassenstrom 12 auf dem Förderelement 13 mit dem Produktmassenstrom 20 im Ausgangsbereich des Förderelementes 14 verglichen wird. Optional werden die Struktur und der Querschnitt des zugeführten kontinuierlichen Produktmassenstroms 12 auch durchgängig innerhalb der gesamten Anordnung 10 beibehalten.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Anordnung 10 weiterbilden können.

Die Fördergeschwindigkeiten der beiden Förderelemente 13, 14 und deren Geschwindigkeitsvektoren sind im Wesentlichen gleich. Das bedeutet, dass die Förderelemente 13, 14 vorzugsweise mit der gleichen Fördergeschwindigkeit und in gleicher Richtung T bzw. T_{R} angetrieben sind, wobei die Transportebenen E_{O} und E_{U} der Förderelemente 13, 14 vorzugsweise horizontal gerichtet und parallel zueinander ausgerichtet sind. Die Fördergeschwindigkeiten können bevorzugt in einem Bereich von +/- 20% variieren, um z.B. aus einem Produktmassenstrom mit einer Stackhöhe von 120mm einen Produktmassenstrom mit einer Stackhöhe von 100mm oder umgekehrt zu bilden. In einer weiteren Ausgestaltung sind das Förderelement 14 zum Fördern der Behälter 15 und/oder das Förderelement 13 zum Fördern des kontinuierlichen Produktmassenstroms 12 in ihren Fördergeschwindigkeiten und Förderrichtungen steuer- und/oder regelbar. Dadurch lässt sich das Füllniveau der Behälter 15 individuell steuern. Weiterhin ermöglicht die Steuer- und/oder Regeleinheit das einfache Umschalten zwischen einem Befüllvorgang der Behälter 15 und einem Entleervorgang der Behälter 15. Die Behälter 15 sind nach einem der Ansprüche 16 bis 21 ausgebildet und eingerichtet und werden im Folgenden näher beschrieben.

Jeder Behälter 15 ist zum Aufnehmen bzw. Abgeben von Portionen 16 eines aus stabförmigen Artikeln 11 der Tabak verarbeitenden Industrie gebildeten Produktmassenstroms 12 ausgebildet und eingerichtet und vorzugsweise an die Anordnung 10 nach einem der Ansprüche 1 bis 11 angepasst. Jeder Behälter 15 umfasst zwei Seitenwände 21, 22, vorzugsweise parallel beabstandet zueinander, und zwei in Transportrichtung T bzw. T_{R} weisende Stirnwände 23, 24. Die Seitenwände 21, 22 und die Stirnwände 23, 24 sind fest miteinander zur Bildung eines Grundkörpers 25 verbunden. Des Weiteren umfasst der Behälter 15 eine Bodenwand 26 zur Bildung eines Aufnahmeraums für die stabförmigen Artikel 11 bzw. Portionen 16 des kontinuierlichen Produktmassenstroms 12 zusammen mit dem Grundkörper 25. Der Grundkörper 25 ist somit nur nach offen vollständig offen. Die Höhe des Behälters 15 bzw. des Aufnahmeraums entspricht im Wesentlichen der Höhe des zu portionierenden bzw. des zu bildenden Produktmassenstroms 12. Damit soll letztlich sichergestellt sein, dass in jedem Behälter 15 nur Portionen enthalten sind, deren Höhe der Stackhöhe des Produktmassenstroms 12 entspricht.

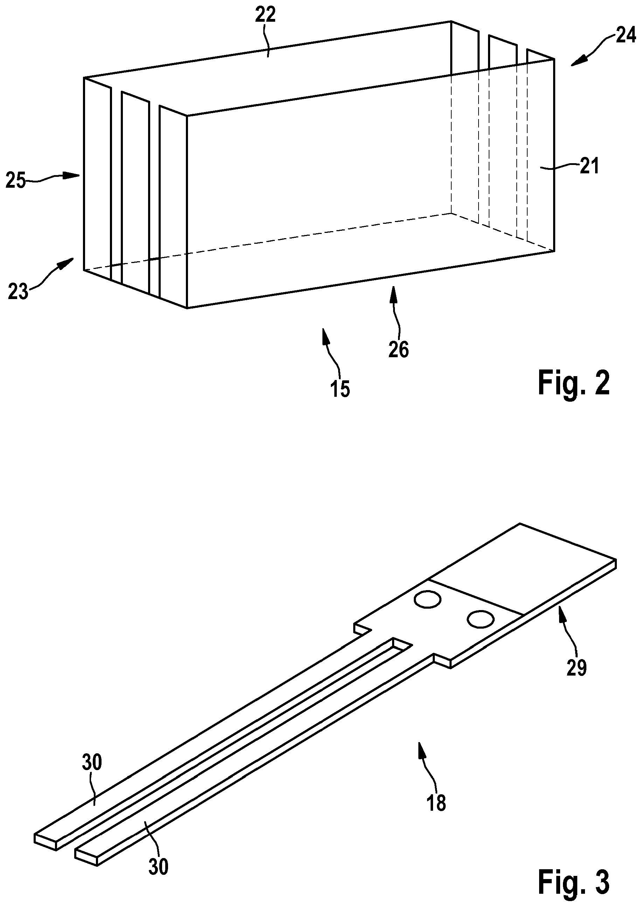

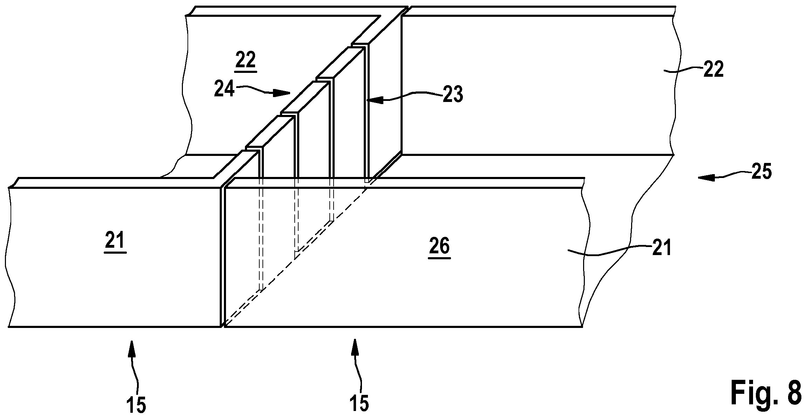

Die Stirnwände 23, 24 des Grundkörpers 25 sind teilweise offen ausgebildet. Das bedeutet in einem Beispiel, dass die Stirnwände 23, 24 in vertikaler Ausrichtung nahezu über die gesamte Höhe geschlitzt ausgebildet sind, derart, dass der Behälter 15 kollisionsfrei durch die Anordnung 10 förderbar ist. Es besteht die Möglichkeit eines einzelnen Schlitzes. In der Ausführungsform gemäß Figur 2 sind zwei Schlitze vorgesehen. Der Figur 8 ist eine weiteren Ausführungsform zu entnehmen, bei der die Stirnwände 23, 24 mehrere Schlitze aufweisen. Die Öffnung der Stirnwände 23, 24 kann auch andere als schlitzförmige Ausnehmungen aufweisen. Die Stirnwände 23, 24 der Grundkörper 25 können korrespondierend zueinander geschlitzt ausgeprägt sein (siehe z.B. Figur 8), so dass sich die Stege einer Stirnwand 23 oder 24 jeweils innerhalb der Schlitze der Stirnwand 24, oder 23 des benachbarten Grundkörpers 25 befinden. Dadurch wird beim Eintauchen der Stirnwände 23, 24 in den Produktmassenstrom 12 weniger Volumen verdrängt, was vorteilhaft bezüglich geringer Umlagerungen und geringer Artikelbeanspruchung ist.

Optional kann die Bodenwand 26 relativ zum Grundkörper 25 vorzugsweise entlang von nicht dargestellten Führungen bewegbar ausgebildet sein. Der Behälter 15 kann eigene Antriebsmittel zum Bewegen der Bodenwand 26 relativ zum Grundkörper 25 aufweisen. Vorzugsweise sind die Antriebsmittel jedoch dem Förderelement 14 zum Fördern der Behälter 15 zugeordnet, wie weiter unten noch beschrieben wird. Die Behälter 15 sind vorzugsweise vertikal, also übereinander bzw. aufeinander, stapelbar ausgebildet. Dazu können die Behälter 15 z.B. auf der Unterseite der Bodenwand 26 und/oder an den der Bodenwand 26 zugewandten Rändern der Seitenwände 21, 22 und/oder der Stirnwände 23, 24 entsprechende Kanten, Nasen, Vorsprünge oder dergleichen aufweisen. In weiteren bevorzugten Ausführungsformen der Behälter 15 ist mindestens eine der Seitenwände 21, 22 mindestens teilweise transparent ausgebildet. Insbesondere die der Bedienperson zugewandte Seitenwand 21 oder 22 ist nahezu vollständig transparent ausgebildet. In weiteren Ausgestaltungen können alle Seitenwände 21, 22 und Stirnwände 23, 24 transparent ausgebildet sein.

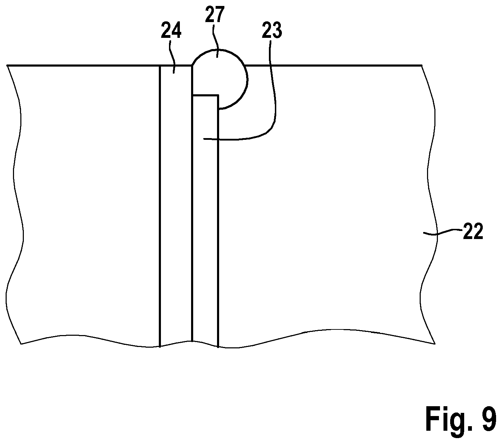

Die Höhe aller Seitenwände 21, 22 und Stirnwände 23, 24 kann gleich ausgebildet sein. In einer bevorzugten Ausführungsform sind zumindest die Stirnwände 23, 24 unterschiedlich hoch ausgebildet. Vorzugsweis ist die in Transportrichtung T bzw. T_{R} vorauslaufende Stirnwand 23 oder 24 niedriger ausgebildet als die nachlaufende Stirnwand 24 oder 23. Der kürzeren Stirnwand 23 oder 24 ist am freien Ende, das dem Produktmassenstrom 12 zugewandt ist, eine Leithilfe 27 zugeordnet. In der Figur 9 ist rein schematisch eine solche Leithilfe 27 dargestellt, die vorzugsweise eine abgerundete, kugelförmige Umfangsfläche aufweist, damit möglicherweise auf die freien Kanten der Stirnwände 23, 24 fallende Artikel 11 schonend in den benachbarten Aufnahmeraum eines Behälters 15 geleitet werden. Vorzugsweise ist der Behälter 15 universell zum Einsatz in allen Ausführungsformen der Anordnung 10 ausgebildet und eingerichtet.

Um die Volumenströme auf dem Förderelement 13, das Füllniveau in den Behältern 15 und weitere für das Befüllen oder Entleeren der Behälter 15 und/oder das Bilden eines kontinuierlichen Produktmassenstroms 12 relevante Aspekte noch individueller und präziser steuern und/oder regeln zu können, sind im Bereich des ersten Förderelementes 13 zum Fördern des kontinuierlichen Produktmassenstroms 12 Detektionsmittel 28 zum Detektieren des Volumenstroms des kontinuierlichen Produktmassenstroms 12 angeordnet. Diese Detektionsmittel 28, beispielsweise Sensoren, sind vorzugsweise im Bereich der Oberführung 17 eingangsseitig des Kanals 19 angeordnet. Zusätzlich zu den Signalen der Sensoren können auch noch Taktsignale einer vorgeordneten Station verwendet werden, um die Artikelanzahl pro Zeiteinheit zu erfassen.

Die Oberführung 17 selbst ist wahlweise als feste Führung oder als feste Führung mit einer ausgangsseitig gelenkigen Klappe oder als feste Führung mit einem ausgangsseitig flexiblen Element oder als antreibbare Kette ausgebildet. Die geometrische Ausgestaltung der Oberführung 17 kann variieren, was Einfluss auf das Füllniveau in den Behältern 15 haben kann. Auch kann das Gewicht der Oberführung 17 variieren, was ebenfalls zur Steuerung des Füllniveaus der Behälter 15 beitragen kann.

Bezüglich der Ausbildung der Unterführung 18 gibt es mehrere explizit dargestellte Ausführungsformen. Bei der Anordnung 10 gemäß Figur 1 ist die Unterführung 18 als geschlitztes Leitelement 29 (siehe z.B. Figur 3) ausgebildet. Das Leitelement 29 erstreckt sich bis in den Bereich der Bodenwand 26 des Behälters 15. Die schlitzartige Ausbildung des Leitelementes 29 korrespondiert zur schlitzartigen Ausbildung der in Transportrichtung T bzw. T_{R} weisenden Stirnwände 23, 24, derart, dass ein kollisionsfreies Fördern der Behälter durch das Leitelement 29 gewährleistet ist. Die Schlitze und die die Schlitze begrenzenden Stege sind so versetzt zueinander angeordnet, dass das Leitelement 29 quasi durch die Behälter 15 kämmen kann. In der dargestellten Ausführungsform der Figuren 1 bis 3 weisen die Stirnwände 23, 24 jeweils zwei Schlitze auf, durch die so genannte Zinken 30 des Leitelementes 29 hindurch geführt werden können. In jedem Fall ist das Leitelement 29 an die Form der Öffnung, der Ausnehmung, des Schlitzes bzw. der Schlitze in den Stirnwänden 23, 24 angepasst. Anders ausgedrückt passen Ausbildung/Formgebung des Leitelementes 29 einerseits und Behälter 15 bzw. schlitzartige Ausnehmung der Stirnwände 23, 24 andererseits derart zueinander, dass das Leitelement 29, obwohl es in die Behälter 15 bzw. den Aufnahmeraum ragt, der kontinuierlichen Förderung des Behälters 15 nicht im Wege steht.

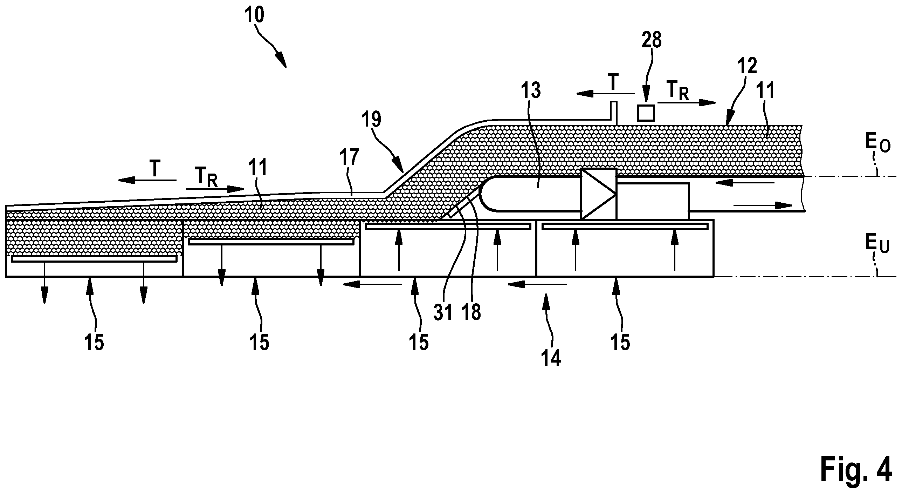

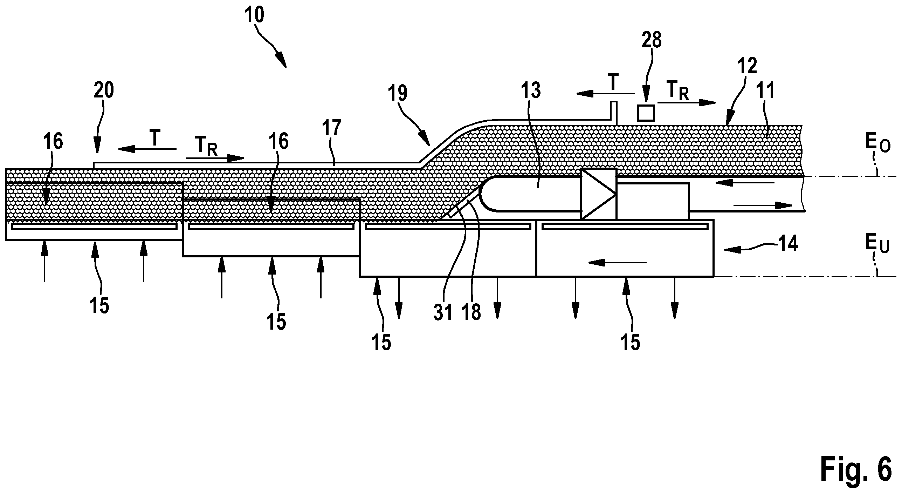

Bei den Anordnungen 10 gemäß der Figuren 4 und 6 ist die Unterführung 18 als verkürztes Leitelement 31 ausgebildet. Mit der Verkürzung wird ausgedrückt, dass das Leitelement 31 bzw. dessen freies Ende oberhalb der darunter geförderten Behälter 15 endet, derart, dass der Behälter 15 kollisionsfrei unterhalb des Leitelementes 31 förderbar ist. Das Leitelement 31 erstreckt sich allerdings ebenso wie in der Ausführungsform gemäß Figur 1 bis in den Bereich der Bodenwand 26 des Behälters 15. Das verkürzte Leitelement 31 kann ein einfaches Blech sein. Andere übliche Leitelemente sind aber ebenfalls einsetzbar. Die Unterführung 18, also sämtliche Leitelemente 29, 31 aller Ausführungsformen können auch als angetriebene Bänder oder dergleichen ausgebildet sein, um den aus den Portionen 16 der Behälter 15 gebildeten Produktmassenstrom 12 aus der unteren Transportebene E_{U} durch den Kanal 19 in die obere Transportebene E_{O} zu fördern.

Wie bereits erwähnt, ist die Bodenwand 26 der Behälter 15 optional bewegbar zum Grundkörper 25 ausgebildet. Diese Ausbildung der Behälter 15 ist insbesondere für die Ausführungsformen der Anordnung 10 gemäß der Figuren 4 und 6 von Bedeutung. Dem Förderelement 14 zum Fördern der Behälter 15 sind Mittel 32 zum Ausüben einer Relativbewegung zwischen der Bodenwand 26 des Behälters 15 und dem Grundkörper 25 des Behälters 15 zugeordnet. Dabei kann es sich z.B. um pneumatische Stempel 33 handeln. Andere übliche Betätigungsorgane sind aber ebenfalls einsetzbar. Die Stempel 33 sind wahlweise zum Absenken und Anheben der Bodenwand 26 relativ zum Grundkörper 25 des Behälters 15 ausgebildet und eingerichtet. Vorzugsweise laufen die Stempel 33 mit dem Förderelement 14 umlaufend mit. Die Stempel 33 können vorzugsweise einzeln angesteuert sein.

### Beispiele

### Herstellung der leitfähigen Werkstoffe

Es werden leitfähige Werkstoffe unterschiedlicher Zusammensetzung hergestellt und untersucht.

Dabei kommt als Grundstoff Polystyrol der Firma The Dow Chemical Company (STYRON 485) zum Einsatz. Für die Beispiele wurde ein intrinsisch dissipatives Polymer (IDP) verwendet, wie es z. B. unter der Bezeichnung CESA - stat OCA0025661-ZT von der Firma Clariant Masterbatches (Deutschland) GmbH vertrieben wird. Die verwendeten Kohlenstofffasern weisen eine Faserlänge von 0,4 mm auf, die verwendeten Stahlfasern eine Länge von 0,7 mm.

In Tabelle 1 sind die zur Herstellung des erfindungsgemäßen leitfähigen Werkstoffs verwendeten Basismaterialien (Rohstoffe) aufgeführt.

**Tabelle 1: Zur Herstellung der erfindungsgemäßen leitfähigen Werkstoffe sowie der Vergleichsbeispiele verwendete Basismaterialien**

| Bestandteil | Gew.-% | Bemerkung |
|---|---|---|
| Polystyrol | 82 | leicht fließend mit hoher Schlagzähigkeit |
| CF | 8 | PAN-basierte Kohlefaser mit folgenden Eigenschaften: |
| | | Zugmodul: 240 - 260 Gpa; |
| | | Zugefestigkeit: 5 - 6 Gpa |
| IDP | 10 | Polyether Copolymer |

Die Anteile an elektrisch leitendem Additiv in Faserform (in den Beispielen entweder Stahl- oder Kohlenstofffasern) sowie an intrinsisch leitfähigem Polymer (IDP) der einzelnen Beispiele (B) und Vergleichsbeispiele (V) sind in der folgenden Tabelle 2 wiedergegeben, wobei sämtliche Angaben Gewichtsprozent sind:

**Tabelle 2: Zusammensetzung der Beispiele und Vergleichsbeispiele**

| Beispiel | Stahlfasern | KohlenstoffFasern | IDP |
|---|---|---|---|
| V1 | -- | -- | -- |
| V2 | -- | -- | 10% |
| V3 | -- | 10 % | -- |
| V4 | -- | 18 % | 10 % |
| B5 | 3% | -- | 8% |
| B6 | -- | 8% | 10 % |

Zur Herstellung des erfindungsgemäßen Werkstoffes werden in dem Fachmann geläufiger Weise die einzelnen Komponenten (Polystyrol, elektrisch leitendes Additiv in Faserform und intrinsisch leitfähiges Polymer sowie etwaige Zusatzstoffe) vermengt, erhitzt und durch eine Düse gedrückt. Der entstehende Strang wird hinter der Düse schrittweise abgeschlagen. Das so aus dem Werkstoff entstehende Kunststoffgranulat wird in Säcke verpackt und kann so, geschützt vor Umwelteinflüssen, gelagert und transportiert werden.

Aus diesem Kunststoffgranulat werden die Behälter mittels Spritzgussverfahren hergestellt. Hierzu gibt es eine Form, die ein Negativ zu dem zu fertigen Bauteil darstellt. Das Kunststoffgranulat wird in eine Spritzgussmaschine, die den Kunststoff erhitzt und in die Form drückt. Dann kühlt die Form ab und wird geöffnet, das fertige Bauteil fällt heraus.

Der erhaltene Werkstoff wird auf seine elektrische Leitfähigkeit geprüft, insbesondere auf seinen spezifischen Oberflächenwiderstand, welcher eine Kenngröße für ableitfähige Werkstoffe darstellt. Dabei kommen folgende Methoden zum Einsatz:
Neben dem Einsatz von Ringelektroden können zwei separate Elektroden (hier Modell 850 nach DIN EN 61340-4-1) zur Bestimmung des Oberflächenwiderstandes benutzt werden. Dies ist die Messung von Punkt-zu-Punkt-Widerständen nach DIN EN 61340-4-1. Benutz wird das Metriso 3000 - MESS-KIT der Firma Wolfgang Warmbier. Diese Messung wird im Folgenden als "Methode 1" bezeichnet.

Es hat sich herausgestellt, dass für die Vorhersage, ob ein Werkstoff für den gewünschten Einsatzzweck - Ladungsaustausch zwischen Behälter und Produkt, sowie Ladungsableitung des Behälters - die erforderliche Leitfähigkeit hat, bekannte Messverfahren nicht hinreichend brauchbare Daten liefern. Vielmehr hat die Anmelderin ein eigenes Messverfahren entwickelt.

Um die Eigenschaft eines Werkstoffes, Ladung mit den verwendeten Produkten, auszutauschen (insbesondere Filter oder Zigarettenpapier), reichen die oben genannten Messungen nicht aus. Es wurden neue Elektroden entwickelt, die die realitätsgetreuen Linien- bzw. Punktberührungen der Produkte mit dem Werkstoff nachbilden und mit diesen Kontaktbedingungen die Messung durchführen. Anhand dieser Messungen lässt sich dann eine Aussage zu der Eignung bzgl. des Anforderungsprofils eines neuen Werkstoffes treffen. Die absoluten Werte, die bei der neuen Messung herauskommen, können nur untereinander verglichen werden. Diese Messung wird im Folgenden als "Methode 2" bezeichnet.

Alle Messungen wurden bei 25°C und 30% relativer Luftfeuchtigkeit durchgeführt, es sind gerundete Mittelwerte aufgeführt. Die Angabe "nicht messbar" bedeutet, dass die Leitfähigkeit so gering war, dass sie unterhalb des Messbaren lag.

In Tabelle 3 sind die für die Beispiele und Vergleichsbeispiele nach den verschiedenen Messmethoden ermittelten Leitfähigkeiten sowie eine Beurteilung der mechanischen Eigenschaften im Hinblick auf eine Verwendung als Behälter in der tabakverarbeitenden Industrie wiedergegeben. Messmethoden 1 und 2 sind vorstehend beschrieben. Beim Praxistest werden Behälter der tabakverarbeitenden Industrie mit Zigarettenfiltern befüllt und der Behälter anschließend wieder geleert. Ist der Behälter im Anschluss an die Leerung vollständig frei von Filtern, ist dies in der Tabelle als "Produkte haften nicht" gekennzeichnet. Verbleiben nach der Leerung hingegen noch Produkte in dem Behälter, ist dies als "Produkte haften" bezeichnet.

Die mechanische Eignung wird wie im Folgenden dargelegt klassifiziert, wobei in die Bewertung der mechanischen Eignung eine Vielzahl von Kriterien wie insbesondere Zugwiderstand, Verhalten im Dreipunkt-Biegeversuch, Oberflächenhärte, Reibverhalten gegen Filterpapier sowie gegen Polyamidband, Sprödigkeit, Verschleißfestigkeit gegen Edelstahl und Sandpapier sowie Schlagfestigkeit einfließen. Dabei wird Polystyrol ohne Zusatz von elektrisch leitfähigen Additiven als Referenz angesetzt und als für den Einsatz in der tabakverarbeitenden Industrie sehr gut geeignet bezeichnet.
+++ : hervorragend geeignet (mechanische Eignung übertrifft Polystyrol ohne Zusatz)
++ : sehr gut geeignet (mechanische Eignung entspricht Polystyrol ohne Zusatz)
+ : geeignet (mechanische Eignung liegt unterhalb von Polystyrol ohne Zusatz, ist für den geforderten Zweck aber noch ausreichend)
- : nicht geeignet (keine mechanische Eignung für den geforderten Zweck)

**Tabelle 3: Ergebnisse der Leitfähigkeitsmessungen und mechanische Eignung**

| Beispiel | Leitfähigkeit Methode 1 [Ohm] | Leitfähigkeit Methode 1 [Ohm] | Praxistest | Mechanische Eignung | Bemerkung |
|---|---|---|---|---|---|
| V1 | nicht messbar | nicht messbar | Produkte haften | ++ | |
| V2 | 1*10^9 | 1,3*10^10 | Produkte haften nicht | - | zu weich |
| V3 | 5000 | nicht messbar | Produkte haften | +++ | |
| V4 | 1000-2000 | 2000-3*10^9 | Produkte haften nicht | - | extrem spröde |
| B5 | 2*10^8 | 2,5*10^10 | Produkte haften nicht | + | erhöhtes Gewicht |
| B6 | 1200 | 2500-1*10^10 | Produkte haften nicht | ++ | |

Die Versuche zeigen Ergebnisse, die nach herkömmlicher Meinung nicht unbedingt zu erwarten waren. So war anzunehmen, dass ein Werkstoff gemäß V3 (mit 10% Kohlenstofffasern), der eine gute Leitfähigkeit aufweist, auch für Behälter der tabakverarbeitenden Industrie gut geeignet sein sollte. Das Material hat zwar exzellente mechanische Eigenschaften und liefert in der Leitfähigkeitsmessung nach Methode 1 auch sehr gute Ergebnisse, jedoch haften die Produkte im Behälter, was durch die neue, von der Anmelderin entwickelte Leitfähigkeitsmessung nach Methode 2 bestätigt wird, bei der für den Werkstoff gemäß V3 keine Leitfähigkeit messbar war.

Der Werkstoff gemäß V2 weist zwar hervorragende Ergebnisse in Bezug auf die Leitfähigkeit auf, ist jedoch im Hinblick auf die mechanischen Eigenschaften nicht verwendbar; der Werkstoff ist zu weich und liefert keinen stabil handhabbaren Behälter.

Überraschender Weise hat sich gezeigt, dass die Kombination von anorganischem Additiv in Faserform und intrinsisch leitfähigem Polymer (B5 und B6) einen Werkstoff liefert, der sowohl eine exzellente elektrische Leitfähigkeit aufweist, die auch für den Anwendungsbereich in der tabakverarbeitenden Industrie eine ausreichende elektrostatische Ableitung gewährleistet, wie auch die Anforderungen an die mechanische Eignung erfüllt.

## Patentansprüche

1. Behälter (15) zum Aufbewahren oder Aufnehmen bzw. Abgeben von stabförmigen Produkten (11) aus der Tabak verarbeitenden Industrie, umfassend einen aus zwei zumindest im Wesentlichen parallelen und beabstandet zueinander angeordneten Seitenwänden (21, 22) und zwei in Transportrichtung T bzw. T_{R} weisenden Stirnwänden (23, 24), einer Rückwand (24) und einer Vorderwand (23), gebildeten Grundkörper (25) sowie eine Bodenwand (26) zur Bildung eines Aufnahmeraumes für die stabförmigen Produkte (11), wobei der Behälter (15) zumindest teilweise, vorzugsweise im Wesentlichen vollständig, aus einem elektrisch leitfähigen Werkstoff gebildet ist, wobei der leitfähige Werkstoff ein Stoffgemisch aus einem Grundstoff, nämlich einem Kunststoff, und mindestens zwei, insbesondere genau zwei, elektrisch leitenden Additiven ist,
**dadurch gekennzeichnet, dass** ein erstes elektrisch leitendes Additiv ein anorganisches Additiv in Faserform, insbesondere ausgewählt aus mindestens einer Substanz der Gruppe bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer oder ein intrinsisch dissipatives Polymer ist.

2. Behälter (15) nach Anspruch 1, **dadurch gekennzeichnet, dass** er zum Aufnehmen bzw. Abgeben von Portionen eines aus stabförmigen Artikeln (11) der Tabak verarbeitenden Industrie gebildeten Produktmassenstroms (12) ausgebildet ist, wobei die Höhe des Behälters (15) bzw. des Aufnahmeraums im Wesentlichen der Höhe des zu portionierenden bzw. des zu bildenden Produktmassenstroms (12), nämlich insbesondere 80-120mm, entspricht.

3. Behälter (15) nach Anspruch 1 oder 2, **dadurch gekennzeichnet, dass** die Stirnwände (23, 24) mindestens teilweise offen ausgebildet sind, nämlich geschlitzt, derart, dass der Behälter (15) kollisionsfrei in einer dafür vorgesehenen Anordnung (10) förderbar ist.

4. Behälter (15) nach einem der Ansprüche 1 bis 3, **dadurch gekennzeichnet, dass** die Bodenwand (26) relativ zum Grundkörper (25) entlang von Führungen bewegbar ausgebildet ist.

5. Behälter (15) nach einem der Ansprüche 1 bis 4, **dadurch gekennzeichnet, dass** die Behälter (15) vertikal stapelbar ausgebildet sind.

6. Behälter (15) nach einem der Ansprüche 1 bis 5, **dadurch gekennzeichnet, dass** mindestens eine der Seitenwände (21, 22) mindestens teilweise transparent ausgebildet ist.

7. Behälter (15) nach einem der Ansprüche 1 bis 6, **dadurch gekennzeichnet, dass** die beiden Stirnwände (23, 24) unterschiedlich hoch ausgebildet sind und der kürzeren Stirnwand (23 oder 24) am freien Ende eine Leithilfe (27) zugeordnet ist.

8. Behälter (15) nach einem der Ansprüche 1 bis 7, **dadurch gekennzeichnet, dass** der Behälter (15) einstückig ausgebildet und mittels eines Spritzgussverfahrens hergestellt ist.

9. Behälter (15) nach einem der Ansprüche 1 bis 8, **dadurch gekennzeichnet, dass** mindestens eine der beiden Seitenwände (21, 22) zur Veränderung des Abstandes A zwischen den Seitenwänden (21, 22) verstellbar und/oder positionierbar ausgebildet ist.

10. Behälter (15) nach einem der Ansprüche 1 bis 9, **dadurch gekennzeichnet, dass** der Grundstoff Polystyrol ist.

11. Behälter (15) nach einem der Ansprüche 1 bis 10, **dadurch gekennzeichnet, dass** das intrinsisch leitfähige Polymer oder das intrinsisch dissipative Polymer einen Gewichtsanteil von 8 % bis 15 %, insbesondere von 9 % bis 10 % aufweist.

12. Behälter (15) nach einem der Ansprüche 1 bis 11, **dadurch gekennzeichnet, dass** das anorganische Additiv in Faserform einen Gewichtsanteil von 3 % bis 11 %, insbesondere von 6 % bis 8 %, und besonders bevorzugt von ungefähr 7 % aufweist.

13. Behälter (15) nach einem der Ansprüche 1 bis 12, **dadurch gekennzeichnet, dass** das anorganische Additiv in Faserform, eine Faserlänge von mehr als 0,02 Millimeter und weniger als 20 Millimeter, vorzugsweise weniger als 2 Millimeter, besonders bevorzugt weniger als 0,2 Millimeter aufweist.

14. Elektrostatisch dissipatives Material, insbesondere zur Herstellung eines Behälters (15) nach einem der Ansprüche 1 bis 13 oder Komponenten eines Transportsystems, bestehend aus einem Grundstoff, nämlich einem Kunststoff, und mindestens zwei, insbesondere genau zwei, elektrisch leitenden Additiven, **dadurch gekennzeichnet, dass** ein erstes elektrisch leitendes Additiv ein anorganisches Additiv in Faserform, insbesondere ausgewählt aus mindestens einer Substanz der Gruppe bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer oder ein intrinsisch dissipatives Polymer ist.

15. Elektrostatisch dissipatives Material nach Anspruch 14, **dadurch gekennzeichnet, dass** der Grundstoff Polystyrol ist.

16. Elektrostatisch dissipatives Material nach Anspruch 14 oder 15, **dadurch gekennzeichnet, dass** das intrinsisch leitfähige Polymer oder das intrinsisch dissipative Polymer einen Gewichtsanteil von 8 % bis 15 %, insbesondere von 9 % bis 10 % hat.

17. Elektrostatisch dissipatives Material nach Anspruch 14 bis 16, **dadurch gekennzeichnet, dass** als zweites elektrisch leitendes Additiv ein intrinsisch dissipatives Polymer aus der Gruppe der Polyether Copolymere eingesetzt wird.

18. Elektrostatisch dissipatives Material nach einem der Ansprüche 14 bis 17, **dadurch gekennzeichnet, dass** das elektrisch leitende Additiv in Faserform einen Gewichtsanteil von 3 % bis 11 %, insbesondere von 6 % bis 8 %, und besonders bevorzugt von ungefähr 7 % aufweist.

19. Elektrostatisch dissipatives Material nach Anspruch 14 bis 18, **dadurch gekennzeichnet, dass** als elektrisch leitendes Additiv in Faserform eine polyacrylnitril(PAN)-basierte Kohlefaser eingesetzt wird.

20. Elektrostatisch dissipatives Material nach einem der Ansprüche 14 bis 19, **dadurch gekennzeichnet, dass** das anorganisches Additiv in Faserform, eine Faserlänge von mehr als 0,02 Millimeter und weniger als 20 Millimeter, vorzugsweise weniger als 2 Millimeter, besonders bevorzugt weniger als 0,2 Millimeter aufweist.

## Claims

1. Container (15) for storing or receiving and/or dispensing rod-shaped products (11) of the tobacco-processing industry, comprising a main body (25) formed from two at least substantially parallel side walls (21, 22) arranged at a distance from one another and two end walls (23, 24) pointing in the conveying direction T or T_{R} respectively, a rear wall (24) and a front wall (23), and a bottom wall (26) for forming a receiving space for the rod-shaped products (11), the container (15) being at least partially, preferably substantially completely, formed from an electrically conductive material, the conductive material being a mixture of a base material, namely a plastic, and at least two, in particular exactly two, electrically conductive additives,
**characterised in that** a first electrically conductive additive is an inorganic additive in fibrous form, in particular selected from at least one substance from the group consisting of carbon, stainless steel and non-ferrous metal, carbon fibres being particularly preferred, and a second electrically conductive additive is an intrinsically conductive polymer, in particular a doped intrinsically conductive polymer or an intrinsically dissipative polymer.

2. Container (15) according to claim 1, **characterised in that** it is configured for receiving or dispensing portions of a product massflow (12) formed from rod-shaped articles (11) of the tobacco-processing industry, wherein the height of the container (15) and/or of the receiving space substantially corresponds to the height of the product massflow (12) to be portioned or formed, namely in particular 80-120mm.

3. Container (15) according to claim 1 or 2, **characterised in that** the end walls (23, 24) are configured to be at least partially open, namely slotted, in such a way that the container (15) can be conveyed without collision in an arrangement (10) provided for this purpose.

4. Container (15) according to any one of claims 1 to 3, **characterised in that** the bottom wall (26) is configured to be movable relative to the main body (25) along guides.

5. Container (15) according to any one of claims 1 to 4, **characterised in that** the containers (15) are configured to be vertically stackable.

6. Container (15) according to any one of claims 1 to 5, **characterised in that** at least one of the side walls (21, 22) is at least partially transparent.

7. Container (15) according to any one of claims 1 to 6, **characterised in that** the two end walls (23, 24) are of different heights and a guide (27) is assigned to the shorter end wall (23 or 24) at the free end.

8. Container (15) according to any one of claims 1 to 7, **characterised in that** the container (15) is configured in one piece and is produced by means of an injection moulding process.

9. Container (15) according to any one of claims 1 to 8, **characterised in that** at least one of the two side walls (21, 22) is configured to be adjustable and/or positionable for altering the distance A between the side walls (21, 22).

10. Container (15) according to any one of claims 1 to 9, **characterised in that** the base material is polystyrene.

11. Container (15) according to any one of claims 1 to 10, **characterised in that** the intrinsically conductive polymer or the intrinsically dissipative polymer has a weight fraction in the range from 8% to 15%, in particular from 9% to 10%.

12. Container (15) according to any one of claims 1 to 11, **characterised in that** the inorganic additive in fibrous form has a weight fraction in the range from 3% to 11%, in particular from 6% to 8%, and particularly preferably of about 7%.

13. Container (15) according to any one of claims 1 to 12, **characterised in that** the inorganic additive in fibrous form has a fibre length of more than 0.02 millimetres and less than 20 millimetres, preferably less than 2 millimetres, particularly preferably less than 0.2 millimetres.

14. Electrostatic-dissipative material, in particular for producing a container (15) according to any one of claims 1 to 13 or components of a transport system, consisting of a base material, namely a plastic, and at least two, in particular exactly two, electrically conductive additives, **characterised in that** a first electrically conductive additive is an inorganic additive in fibrous form, in particular selected from at least one substance of the group consisting of carbon, stainless steel and non-ferrous metal, carbon fibres being particularly preferred, and a second electrically conductive additive is an intrinsically conductive, in particular a doped intrinsically conductive polymer or an intrinsically dissipative polymer.

15. Electrostatic-dissipative material according to claim 14, **characterised in that** the base material is polystyrene.

16. Electrostatic-dissipative material according to claim 14 or 15, **characterised in that** the intrinsically conductive polymer or the intrinsically dissipative polymer has a weight fraction in the range from 8% to 15%, in particular from 9% to 10%.

17. Electrostatic-dissipative material according to claim 14 to 16, **characterised in that** an intrinsically dissipative polymer from the group of polyether copolymers is used as the second electrically conductive additive.

18. Electrostatic-dissipative material according to any one of claims 14 to 17, **characterised in that** the electrically conductive additive in fibrous form has a weight fraction in the range from 3% to 11%, in particular from 6% to 8%, and particularly preferably of about 7%.

19. Electrostatic-dissipative material according to claim 14 to 18, **characterised in that** a polyacrylonitrile (PAN)-based carbon fibre is used as the electrically conductive additive in fibrous form.

20. Electrostatic-dissipative material according to any one of claims 14 to 19, **characterised in that** the inorganic additive in fibrous form has a fibre length of more than 0.02 millimetres and less than 20 millimetres, preferably less than 2 millimetres, particularly preferably less than 0.2 millimetres.

## Revendications

1. Réservoir (15) pour conserver ou recevoir ou distribuer des produits en forme de tige (11) de l'industrie de transformation du tabac, comprenant un corps de base (25) formé par deux parois latérales (21, 22) au moins essentiellement parallèles et agencées à distance l'une de l'autre et deux parois frontales (23, 24) orientées dans la direction de transport T ou T_{R}, une paroi arrière (24) et une paroi antérieure (23), ainsi qu'une paroi de fond (26) pour former un espace de réception pour les produits en forme de tige (11), le réservoir (15) étant formé au moins en partie, de préférence essentiellement en totalité, d'un matériau électriquement conducteur, le matériau conducteur étant un mélange de matières composé d'une matière de base, à savoir une matière plastique, et d'au moins deux, notamment exactement deux, additifs électriquement conducteurs,
**caractérisé en ce qu'**un premier additif électriquement conducteur est un additif inorganique sous forme fibreuse, notamment choisi parmi au moins une substance du groupe constitué par le carbone, l'acier inoxydable et un métal non ferreux, les fibres de carbone étant particulièrement préférées, et un deuxième additif électriquement conducteur est un polymère intrinsèquement conducteur, notamment un polymère intrinsèquement conducteur dopé ou un polymère intrinsèquement dissipatif.

2. Réservoir (15) selon la revendication 1, **caractérisé en ce qu'**il est configuré pour recevoir ou distribuer des portions d'un flot massif de produits (12) formé d'articles en forme de tige (11) de l'industrie de transformation du tabac, la hauteur du réservoir (15) ou de l'espace de réception correspondant essentiellement à la hauteur du flot massif de produits (12) à découper ou à former, à savoir notamment 80 à 120 mm.

3. Réservoir (15) selon la revendication 1 ou 2, **caractérisé en ce que** les parois frontales (23, 24) sont configurées au moins partiellement sous forme ouverte, à savoir fendue, de telle sorte que le réservoir (15) peut être transporté sans collision dans un agencement (10) prévu à cet effet.

4. Réservoir (15) selon l'une quelconque des revendications 1 à 3, **caractérisé en ce que** la paroi de fond (26) est configurée pour pouvoir être déplacée par rapport au corps de base (25) le long de guides.

5. Réservoir (15) selon l'une quelconque des revendications 1 à 4, **caractérisé en ce que** les réservoirs (15) sont configurés pour pouvoir être empilés verticalement.

6. Réservoir (15) selon l'une quelconque des revendications 1 à 5, **caractérisé en ce qu'**au moins l'une des parois latérales (21, 22) est configurée au moins partiellement sous forme transparente.

7. Réservoir (15) selon l'une quelconque des revendications 1 à 6, **caractérisé en ce que** les deux parois frontales (23, 24) sont configurées pour être de hauteur différente et un auxiliaire de direction (27) est associé à l'extrémité libre à la paroi frontale la plus courte (23 ou 24).

8. Réservoir (15) selon l'une quelconque des revendications 1 à 7, **caractérisé en ce que** le réservoir (15) est configuré d'un seul tenant et est fabriqué au moyen d'un procédé de moulage par injection.

9. Réservoir (15) selon l'une quelconque des revendications 1 à 8, **caractérisé en ce qu'**au moins l'une des deux parois latérales (21, 22) est configurée pour être réglable et/ou positionnable afin de modifier la distance A entre les parois latérales (21, 22).

10. Réservoir (15) selon l'une quelconque des revendications 1 à 9, **caractérisé en ce que** la matière de base est le polystyrène.

11. Réservoir (15) selon l'une quelconque des revendications 1 à 10, **caractérisé en ce que** le polymère intrinsèquement conducteur ou le polymère intrinsèquement dissipatif présente une proportion en poids de 8 % à 15 %, notamment de 9 % à 10 %.

12. Réservoir (15) selon l'une quelconque des revendications 1 à 11, **caractérisé en ce que** l'additif inorganique sous forme fibreuse présente une proportion en poids de 3 % à 11 %, notamment de 6 % à 8 %, et de manière particulièrement préférée d'environ 7 %.

13. Réservoir (15) selon l'une quelconque des revendications 1 à 12, **caractérisé en ce que** l'additif inorganique sous forme fibreuse présente une longueur de fibres de plus de 0,02 millimètre et de moins de 20 millimètres, de préférence de moins de 2 millimètres, de manière particulièrement préférée de moins de 0,2 millimètre.

14. Matériau électrostatiquement dissipatif, notamment pour la fabrication d'un réservoir (15) selon l'une quelconque des revendications 1 à 13 ou de composants d'un système de transport, constitué d'une matière de base, à savoir une matière plastique, et d'au moins deux, notamment exactement deux, additifs électriquement conducteurs, **caractérisé en ce qu'**un premier additif électriquement conducteur est un additif inorganique sous forme fibreuse, notamment choisi parmi au moins une substance du groupe constitué par le carbone, l'acier inoxydable et un métal non ferreux, les fibres de carbone étant particulièrement préférées, et un deuxième additif électriquement conducteur est un polymère intrinsèquement conducteur, notamment un polymère intrinsèquement conducteur dopé ou un polymère intrinsèquement dissipatif.

15. Matériau électrostatiquement dissipatif selon la revendication 14, **caractérisé en ce que** la matière de base est le polystyrène.

16. Matériau électrostatiquement dissipatif selon la revendication 14 ou 15, **caractérisé en ce que** le polymère intrinsèquement conducteur ou le polymère intrinsèquement dissipatif a une proportion en poids de 8 % à 15 %, notamment de 9 % à 10 %.

17. Matériau électrostatiquement dissipatif selon les revendications 14 à 16, **caractérisé en ce qu'**un polymère intrinsèquement dissipatif du groupe des copolymères de polyéther est utilisé en tant que deuxième additif électriquement conducteur.

18. Matériau électrostatiquement dissipatif selon l'une quelconque des revendications 14 à 17, **caractérisé en ce que** l'additif électriquement conducteur sous forme fibreuse présente une proportion en poids de 3 % à 11 %, notamment de 6 % à 8 %, et de manière particulièrement préférée d'environ 7 %.

19. Matériau électrostatiquement dissipatif selon les revendications 14 à 18, **caractérisé en ce qu'**une fibre de carbone à base de polyacrylonitrile (PAN) est utilisée en tant qu'additif électriquement conducteur sous forme fibreuse.

20. Matériau électrostatiquement dissipatif selon l'une quelconque des revendications 14 à 19, **caractérisé en ce que** l'additif inorganique sous forme fibreuse présente une longueur de fibres de plus de 0,02 millimètre et de moins de 20 millimètres, de préférence de moins de 2 millimètres, de manière particulièrement préférée de moins de 0,2 millimètre.
